# EUROPÄISCHE PATENTANMELDUNG

(11) **EP 4 481 652 A1**
(43) Veröffentlichungstag der Anmeldung: **25.12.2024**
(21) Anmeldenummer: 24179762.0
(22) Anmeldetag: 04.06.2024
(51) Int. Cl.: G06Q 10/087, H04W 4/029

(54) **KOPPLUNGSVERFAHREN**

(30) Priorität: 20.06.2023 DE 102023116121
(71) Anmelder: Scheidt & Bachmann GmbH, 41238 Mönchengladbach (DE)
(72) Erfinder: Elser, Hannes, 51072 Aachen (DE); Kamp, Sebastian, 41352 Korschenbroich (DE); Adlon, Katharina, M. Sc., 52072 Aachen (DE)
(74) Vertreter: Cohausz & Florack

(57) **Zusammenfassung**

Die Erfindung betrifft ein Kopplungsverfahren, insbesondere computerimplementiertes Kopplungsverfahren, umfassend Bereitstellen einer Objektkennung eines digitalen Objekts, Erhalten eines durch mindestens eine Empfangseinrichtung (202) eines Ortungssystems (200) empfangenen ersten Transponderdatensatzes eines ersten Transponders (206, 406), wobei der erste Transponder (206, 406) einen Ereignissensor (208) umfasst, eingerichtet zum Erfassen eines ersten Ereignisverlaufs des ersten Transponders (206, 406), wobei der erste Transponderdatensatz zumindest eine erste Transponderkennung des ersten Transponders (206, 406) und den erfassten ersten Ereignisverlauf enthält, Bestimmen, ob der in dem erhaltenen Transponderdatensatz enthaltene erste Ereignisverlauf ein vordefiniertes Ereigniskriterium erfüllt, und Koppeln des digitalen Objekts mit dem ersten Transponder (206, 406) durch ein Generieren eines Kopplungsdatensatzes, enthaltend die Objektkennung des digitalen Objekts und die erste Transponderkennung des ersten Transponders, nur dann, wenn zumindest bestimmt wird, dass der erste Ereignisverlauf das vordefinierte Ereigniskriterium erfüllt.

## Beschreibung

Die Erfindung betrifft ein Kopplungsverfahren, insbesondere ein computerimplementiertes Kopplungsverfahren, zum Koppeln eines digitalen Objekts mit einem Transponder. Darüber hinaus betrifft die Erfindung ein Computerprogramm, eine Datenverarbeitungsvorrichtung, insbesondere eingerichtet zum Ausführen des Computerprogramms, ein Ortungssystem und eine Verwendung.

Im Stand der Technik werden Ortungssysteme zum Verfolgen von Objekten und/oder Personen eingesetzt. Bekannt sind insbesondere Echtzeit-Ortungssysteme (auch als Real-Time Locating Systems (RTLS) bezeichnet) zum automatischen Identifizieren und Verfolgen des Standorts von Objekten oder Personen in Echtzeit. In der Regel wird ein derartiges Ortungssystem in einem geschlossenen bzw. abgeschlossenen Bereich implementiert, wie einem Gebäude oder einer Gebäudeanordnung mit beispielsweise einer Mehrzahl von verteilten und miteinander verbundenen Gebäudeteilen.

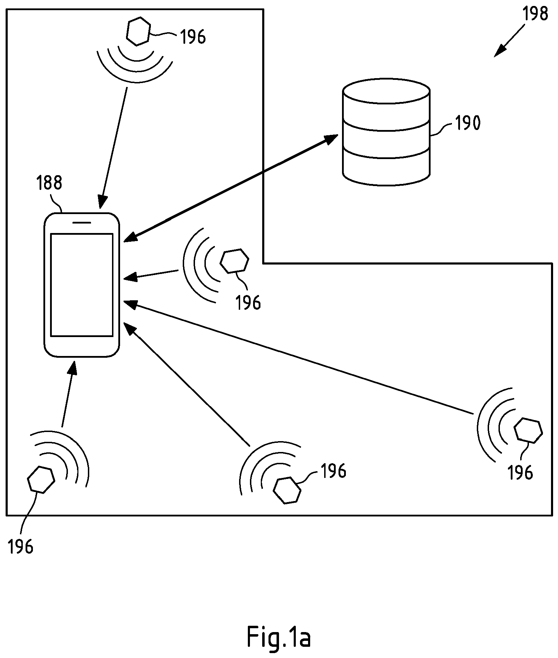

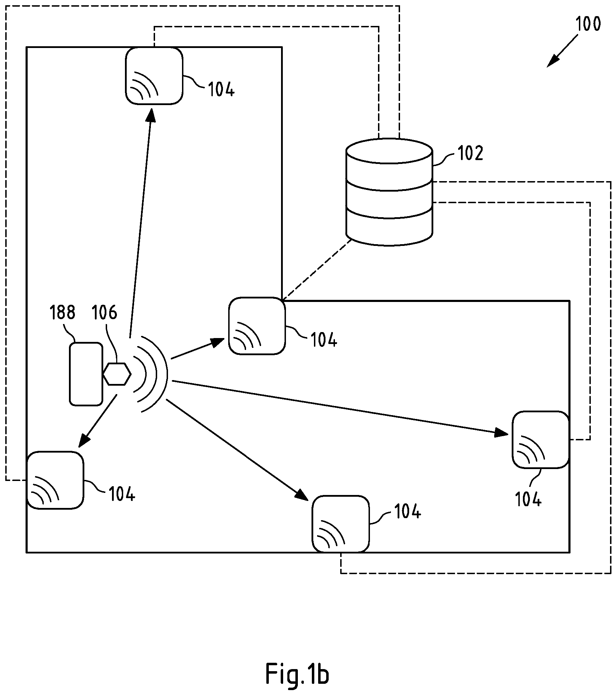

Grundsätzlich kann die Ortung in einem Ortungssystem auf zwei unterschiedlichen Prinzipien basieren, die zur Veranschaulichung in den Figuren 1a (Eigenortungsprinzip) und 1b (Fremdortungsprinzip) schematisch dargestellt sind. Hierbei zeigt die Figur 1 a ein Ortungssystem 198 zur Eigenortung mit mindestens einem Sender 196 (in der Regel eine Vielzahl von Sendern) und mindestens einer (zentralen) Datenverarbeitungsvorrichtung 190, um mindestens ein Objekt 188 zu orten. Bei der Eigenortung empfängt das zu lokalisierende, bewegliche Objekt 188 bzw. ein Empfänger des Objekts 188 Signale in verschiedenen Signalstärken von den fest montierten Sendern 196 bzw. Transpondern, deren Positionen im Ortungssystem und insbesondere im Objekt bekannt sind. Aus diesen Daten kann das Objekt 188 seine eigene Position bestimmen und insbesondere an die mindestens eine Datenverarbeitungsvorrichtung 190 übertragen.

Die Figur 1b zeigt ein Ortungssystem 100 zur Fremdortung mit mindestens einer Empfangseinrichtung 104 (in der Regel kann eine Mehrzahl von (fest-montierten) Empfangseinrichtungen 104 vorgesehen sein) und einer (zentralen) Datenverarbeitungsvorrichtung 102, die mit der mindestens einen Empfangseinrichtung 104 kommunikativ verbunden ist. Ferner ist in der Figur 1b zu erkennen, dass ein drahtlos arbeitender Transponder 106 an dem zu verfolgenden Objekt 188 (bzw. einem Nutzer) befestigt ist. Die festen Referenzpunkte in Form der Empfangseinrichtungen 104 sind eingerichtet zum Empfangen der (beispielsweise periodisch ausgesendeten) Transpondersignale des mindestens einen Transponders 106.

Ferner kann eine jeweilige Empfangseinrichtung 104 eingerichtet sein zum Übertragen zumindest des Dateninhalts des mindestens einen empfangenen Transpondersignals an die Datenverarbeitungsvorrichtung 102 insbesondere eines Hintergrundsystems. Die Datenverarbeitungsvorrichtung 102 kann eingerichtet sein zum Auswerten des erhaltenen Dateninhalts. Dadurch kann die Position des Objekts in der Datenverarbeitungsvorrichtung 102 bestimmt werden und/oder es kann z.B. festgestellt werden, dass ein Transponder 106 bzw. das entsprechende Objekt 188 insbesondere zu einem bestimmbaren Zeitpunkt einen definierten Teilbereich des abgeschlossenen Bereichs verlassen oder betreten hat. Dies kann zum Generieren und Speichern eines entsprechenden Ereignisses in der Datenverarbeitungsvorrichtung des Hintergrundsystems führen.

Physikalisch basiert ein Ortungssystem, insbesondere in Form eines RTLS, in der Regel auf einer Form der Hochfrequenz (HF)-Kommunikationstechnik, wie UWB (Ultra-Wideband), RFID (Radio Frequency Identification), WiFi oder Bluetooth (insbesondere Bluetooth LE). Jedoch nutzen einige Ortungssysteme optische (z.B. Infrarot) und/oder akustische (z.B. Ultraschall) Technologien anstelle von oder zusätzlich zur HF-Technologie. Der Aufbau eines RTLS ist insbesondere in der Norm ISO/IEC 24730 beschrieben.

Zum Ermöglichen einer Verfolgung eines Objekts ist es bei einem beschriebenen Ortungssystem in der Regel erforderlich, eine (informatorische) Verknüpfung bzw. Kopplung zwischen einem Transponder und dem Objekt herzustellen. Erst wenn in der Datenverarbeitungsvorrichtung bzw. dem Hintergrundsystem bekannt ist, welcher Transponder an welchem Objekt befestigt ist, können individuelle Objekte verfolgt und insbesondere Ereignisse für das Objekt erfasst und/oder generiert werden. Objekte und Transponder benötigen daher eine digitale Repräsentanz in dem Hintergrundsystem, insbesondere in Form eines Kopplungsdatensatzes, enthaltend beispielsweise eine Objektkennung des Objekts und eine Transponderkennung des Transponders. Ein Koppeln bzw. Verknüpfen erfolgt insbesondere durch ein sogenanntes Pairing, bei dem in dem Hintergrundsystem eine Transponderkennung und eine Objektkennung in dem Kopplungsdatensatz miteinander verknüpft werden können.

Im Stand der Technik wird für das Durchführen des Koppelns bzw. Pairings zunächst ein Transponder durch einen Nutzer manuell ausgewählt, insbesondere aus einer Vielzahl an verfügbaren Transpondern. Dann wird mittels eines Lesegeräts oder eines Eingabegeräts die Transponderkennung des ausgewählten Transponders erfasst. Zudem wählt der Nutzer ein mit dem Transponder zu verknüpfendes Objekt aus. Auch hier kann ein Erfassen der Objektkennung durch ein Lesegerät oder Eingabegerät oder eine digitale Schnittstelle erfolgen. Dann werden die genannten Kennungen in dem (gemeinsamen) Kopplungsdatensatz gespeichert, und der Transponder wird an dem Objekt befestigt.

Beispielsweise kann ein vorbeschriebenes Ortungssystem in einem Produktionssystem zum Produzieren mindestens eines Produkts aus mindestens einem Bauteil eingesetzt werden. In einem Produktionssystem gibt es in der Regel eine Vielzahl an physischen Objekten (z.B. Transportvorrichtungen in Form von Ladungsträgern, Bauteile, Produkte etc.) und eine Vielzahl an digitalen Objekten in einem sogenannten ERP-System (Enterprise Resource Planning System) des Ortungssystems. Ein digitales Objekt (z.B. Handling Unit, Fertigungsauftrag, Serialnummer etc.) kann verschiedene und beispielsweise zumindest teilweise veränderliche Daten (z.B. Stückzahl, Status) enthalten. Ein digitales Objekt wird insbesondere genutzt zum Steuern eines Produktionsprozesses zum Produzieren mindestens eines Produkts aus mindestens einem Bauteil. Ein digitales Objekt in Form eines ERP-Objekts kann bedarfsabhängig neu erzeugt werden und/oder aus einem Speicher ausgewählt werden. Dies erfolgt entweder automatisiert im Ortungssystems oder durch eine manuelle Eingabe.

In einem Ortungssystem sind insbesondere ein digitales Objekt und ein physisches Objekt miteinander verknüpft bzw. gekoppelt. Im Stand der Technik erfolgt die Verknüpfung in der Regel über ein Papier an dem physischen Objekt, auf dem eine eindeutige Objektkennung des digitalen Objekts aufgebracht ist (z.B. in Form eines alphanumerisches Textes, Barcodes etc.). Das Verändern der in dem Ortungssystem hinterlegten Daten (z.B. eine Statusänderung, Stückzahländerung) erfolgt im Stand der Technik durch manuelles Eingeben und/oder Scannen der auf dem Papier aufgebrachten digitalen Objektkennung.

Mithilfe eines Ortungssystems können physische Objekte automatisch verfolgt und das mit dem physischen Objekt über einen Transponder verknüpfte digitale Objekt gesteuert werden, insbesondere abhängig vom detektierten Ort des physischen Objekts bzw. des daran angebrachten Transponders. Dazu können das digitale Objekt und der Transponder des physischen Objekts digital miteinander verknüpft bzw. gekoppelt werden, und dieser Transponder kann an dem physischen Objekt befestigt werden, das dem digitalen Objekt entspricht. Digitale Objekte können zeitlich befristet aktiv sein (z.B. Fertigungsaufträge). Daher sind während des Betriebs eines mittels eines Ortungssystems gesteuerten Produktionssystems eine Vielzahl an Kopplungsvorgängen (und ggf. Entkopplungsvorgängen) von digitalen Objekten und Transpondern notwendig.

Ein manuelles Koppeln von einer digitaler Objektkennung und Transponderkennung ist jedoch nicht nur sehr (zeit)aufwendig, sondern beim Stand der Technik auch immer mit einer hohen Fehlerrate verbunden. So kommt es immer wieder dazu, dass ein Transponder nicht mit einem digitalen Objekt gekoppelt wurde oder ein digitales Objekt mit einem Transponder gekoppelt wird, der sich auch in einem Kopplungsbereich befindet, jedoch tatsächlich gar nicht verwendet wird für das digitale Objekt bzw. das entsprechende physische Objekt. Wenn beispielsweise zwei Transponder verfügbar sind, muss sichergestellt werden, dass nur derjenige Transponder bzw. dessen Kennung mit dem digitalen Objekt gekoppelt wird, der auch tatsächlich mit dem zu verfolgenden physischen Objekt verknüpft wird. Wie beschrieben, ist die Zuverlässigkeit der aus dem Stand der Technik bekannten Kopplungsverfahren nicht ausreichend. Dies wiederum führt dazu, dass kein ausreichend zuverlässiges Verfolgen von Objekten (bzw. Personen) mit einem Ortungssystem des Stands der Technik möglich ist.

Daher liegt der Erfindung die Aufgabe zugrunde, eine Möglichkeit zu schaffen, mit der die Nachteile des Stands der Technik zumindest reduziert werden und insbesondere ein zuverlässiges Verfolgen von Objekten mit einem Ortungssystem ermöglicht wird.

Die Aufgabe wird gemäß einem ersten Aspekt der Erfindung gelöst durch ein Kopplungsverfahren nach Anspruch 1, insbesondere ein computerimplementiertes Kopplungsverfahren. Das Kopplungsverfahren umfasst:
- Bereitstellen einer Objektkennung eines digitalen Objekts,
- Erhalten eines durch mindestens eine Empfangseinrichtung eines Ortungssystems empfangenen ersten Transponderdatensatzes eines ersten Transponders,
- wobei der erste Transponder einen Ereignissensor umfasst, eingerichtet zum Erfassen eines ersten Ereignisverlaufs des ersten Transponders,
- wobei der erste Transponderdatensatz zumindest eine erste Transponderkennung des ersten Transponders und den erfassten ersten Ereignisverlauf enthält,
- Bestimmen, ob der in dem erhaltenen ersten Transponderdatensatz enthaltene erste Ereignisverlauf ein vordefiniertes Ereigniskriterium erfüllt, und
- Koppeln des digitalen Objekts mit dem ersten Transponder durch ein Generieren eines Kopplungsdatensatzes, enthaltend die Objektkennung des digitalen Objekts und die erste Transponderkennung des ersten Transponders, nur dann, wenn zumindest bestimmt wird, dass der erste Ereignisverlauf das vordefinierte Ereigniskriterium erfüllt.

Indem im Gegensatz zum Stand der Technik erfindungsgemäß ein (computerimplementiertes) Kopplungsverfahren zur Verfügung gestellt wird zum Koppeln eines bereitgestellten digitalen Objekts und eines bereitgestellten (realen) Transponders (der insbesondere an dem zu verfolgenden physischen Objekt befestigbar ist), bei dem ein Koppeln des digitalen Objekts mit dem Transponder nur dann erfolgt, wenn der Transponder einen Ereignisverlauf erfahren hat, der ein vordefiniertes bzw. vorgegebenes Ereigniskriterium erfüllt, werden die Nachteile des Stands der Technik zumindest reduziert und insbesondere ein zuverlässiges Verfolgen von Objekten mit einem Ortungssystem ermöglicht. Insbesondere kann für den Fall, dass sich zwei Transponder in einem Kopplungsbereich befinden, in zuverlässigerer Weise der zu koppelnde Transponder bestimmt werden, da in der Regel nur der zu koppelnde Transponder einen Ereignisverlauf erfährt, der das vordefinierte (spezifische) Ereigniskriterium erfüllt, während ein Ereignisverlauf des anderen Transponders das Ereigniskriterium gerade nicht erfüllt.

Das erfindungsgemäße Kopplungsverfahren dient zum Koppeln mindestens eines digitalen Objekts mit mindestens einem Transponder in einem Ortungssystem zum Verfolgen des Standorts des mindestens einen physischen Objekts, an dem der Transponder befestigbar bzw. befestigt ist. Das erfindungsgemäße Ortungssystem basiert insbesondere auf dem sogenannten Fremdortungsprinzip (vgl. auch Fig. 1b).

Das Ortungssystem kann mindestens eine (zentrale) Datenverarbeitungsvorrichtung und mindestens eine mit der Datenverarbeitungsvorrichtung kommunikativ verbundene (und insbesondere fest-montierte) Empfangseinrichtung umfassen, insbesondere eine Vielzahl von derartigen Empfangseinrichtungen.

Das Ortungssystem, insbesondere ein RTLS, kann in einem geschlossenen bzw. abgeschlossenen Bereich implementiert werden, wie ein Gebäude oder eine Gebäudeanordnung mit beispielsweise einer Mehrzahl von verteilt und miteinander verbundenen Gebäudeteilen. Ausdrücklich kann das Ortungssystem aber auch eine Außenfläche oder mehrere Außenflächen eines Gebäudes oder einer Mehrzahl von Gebäuden umfassen; ebenso wie ein Ortungssystem mehrere geografisch getrennte Standorte umfassen kann, deren Verbindungen (Verkehrswege, Straßen, Schienen, Wasserstraßen, Flugrouten, etc.) nicht von dem Ortungssystem erfasst sind. Insbesondere können mit dem Ortungssystem der abgeschlossene Bereich überwacht und Objekte bzw. dessen Transponder in diesem Bereich verfolgt werden. Insbesondere können eine Mehrzahl an Empfangseinrichtungen in dem genannten Bereich derart verteilt angeordnet werden, dass zumindest ein Teil des Bereichs, vorzugsweise der gesamte Bereich, durch die jeweiligen Empfangsreichweiten der jeweiligen Empfangseinrichtungen abgedeckt wird. Dies meint insbesondere, dass ein Transpondersignal, das von einem sich in dem abgeschlossenen bzw. begrenzten Bereich befindlichen Transponder ausgesendet wird, durch mindestens eine Empfangseinrichtung der Mehrzahl von Empfangseinrichtungen empfangbar ist.

Eine erfindungsgemäße Empfangseinrichtung weist insbesondere eine in dem genannten Bereich fest montierte Antenne auf. Eine Empfangseinrichtung kann insbesondere eine Antenne und mindestens ein Antennensignalauswertemodul zum Auswerten von Transpondersignalen umfassen.

Das Kopplungsverfahren umfasst das Bereitstellen eines digitalen Objekts mit einer Objektkennung des digitalen Objekts. Ein digitales Objekt bzw. virtuelles Objekt ist insbesondere ein Objektdatensatz, enthaltend zumindest die Objektkennung. Eine Objektkennung ist insbesondere eine systemweit eindeutige Kennung. Mit anderen Worten, das digitale Objekt ist anhand der Objektkennung eindeutig in dem Ortungssystem identifizierbar. Beispielsweise kann ein digitales Objekt ein Fertigungsauftrag, eine Handling Unit, eine Serialnummer etc. sein.

Ein digitales Objekt bzw. ein entsprechender Objektdatensatz kann neben der Objektkennung mindestens ein weiteres Datum enthalten, beispielsweise ein veränderliches Datum über die (augenblickliche) Stückzahl der Produkte in dem entsprechenden physischen Objekt und/oder über den (augenblicklichen) Status des entsprechenden physischen Objekts. Ein Objektdatensatz kann alternativ oder zusätzlich weitere Daten enthalten, die insbesondere das digitale Objekt spezifizieren, beispielsweise die Objektart (z.B. Fertigungsauftragstyp) beschreiben.

Vorzugsweise kann das digitale Objekt mit einem entsprechenden realen bzw. physischen Objekt verknüpft werden. Das reale Objekt kann bevorzugt eine Transportvorrichtung sein, wie eine Transportkiste, ein Transportfahrzeug, aber auch ein anderes Objekt, wie ein Produkt, Bauteil etc. Beispielsweise kann bei einem digitalen Objekt in Form eines Fertigungsauftrags das physische Objekt eine Transportvorrichtung sein, die initial mit physischen Elementen (z.B. Bauteile oder Halbzeuge) befüllt werden kann, die im Verlauf der Produktion zum physischen Produkt entsprechend dem Fertigungsauftrag bearbeitet und um weitere Bauteile ergänzt werden. Der erste Transponder kann befestigt werden an dem realen Objekt, wie der Transportvorrichtung, das mit dem digitalen Objekt verknüpft ist. Während des Fertigungsauftrags kann das entsprechende physische Objekt verfolgt und das Objekt bzw. der Fertigungsauftrag in bekannter Weise durch die Datenverarbeitungsvorrichtung überwacht werden. Beispielsweise kann nach einem Beendigen des Fertigungsauftrags eine virtuelle und physische Entkopplung erfolgen.

Darüber hinaus umfasst das erfindungsgemäße Kopplungsverfahren ein Erhalten eines durch mindestens eine Empfangseinrichtung eines Ortungssystems empfangenen ersten Transponderdatensatzes des ersten Transponders. Das Ortungssystem kann ein Erhaltungsmodul bzw. ein Empfangsmodul umfassen, eingerichtet zum Erhalten des ersten Transponderdatensatzes von einer Empfangseinrichtung des Ortungssystems.

Die Empfangseinrichtung kann insbesondere ein Teil eines Nahbereichsempfängers sein bzw. diesen bilden. Die mindestens eine Empfangseinrichtung kann eingerichtet sein zum Empfangen eines Transpondersignals eines sich in einem (definierten) Kopplungsbereich befindlichen Transponders. Insbesondere kann ein Kopplungsbereich bzw. ein Pairing-Bereich durch die mindestens eine Empfangseinrichtung (vollständig) überwacht bzw. durch deren Empfangsreichweite abgedeckt werden. Ein von wenigstens einer Empfangseinrichtung (also beispielweise der Antenne der Empfangseinrichtung) "überwachter" Bereich ist insbesondere ein Ort, an dem bestimmungsgemäß betriebene Empfangseinrichtungen auswertbare elektromagnetische Signale von wenigstens einem Transponder empfangen können.

Vorzugsweise kann ein Transponder ein aktiver Transponder sein, insbesondere umfassend einen Energiespeicher zum Versorgen der mindestens einen elektrisch betriebenen Transponderkomponente mit elektrischer Energie. Der Transponder kann bevorzugt ein Hochfrequenz (HF)-Kommunikationstechnik-Transponder sein, wie ein UWB (Ultra-Wideband) Transponder, RFID (Radio Frequency Identification) Transponder, WiFi Transponder oder Bluetooth Transponder. Besonders bevorzugt ist der Transponder ein BLE-Transponder bzw. ein BLE-Beacon. Insbesondere kann ein derartiger Transponder über ein entsprechendes Sendemodul (mit einer Antenne) und ein Verarbeitungsmodul verfügen, eingerichtet zum Erzeugen von über das Sendemodul zu versendenden Transpondersignalen.

Es versteht sich jedoch, dass alternativ oder zusätzlich andere Systeme mit anderen Technologien eingesetzt werden, wie optische (z.B. Infrarot) und/oder akustische (z.B. Ultraschall) Technologien anstelle von oder zusätzlich zur HF-Technologie.

Wie bereits beschrieben wurde, ist das Ortungssystem insbesondere ein Echtzeit-Ortungssystem bzw. ein RTLS, insbesondere nach der Norm ISO/IEC 24730.

Der mindestens eine Transponder (des Ortungssystems) kann mindestens einen Ereignissensor umfassen. Ein Ereignissensor ist eingerichtet zum Erfassen eines ersten Ereignisverlaufs des ersten Transponders. Dies meint insbesondere, dass ein zeitlicher Ereignisverlauf, den der Transponder erfährt, durch den mindestens einen ersten Ereignissensor in Form von (zeitabhängen) Ereignisparameterwerten erfasst werden kann, insbesondere gemessen werden kann. Ein erfasster Ereignisverlauf wird insbesondere durch eine Mehrzahl (insbesondere eine Reihe) von (zeitabhängen) Ereignisparameterwerten gebildet, die durch den Ereignissensor des Transponders zeitlich nacheinander gemessen wurden.

Bei Varianten der Erfindung kann ein Transponder auch zwei oder mehr unterschiedliche Ereignissensoren umfassen, um insbesondere eine entsprechende Anzahl an unterschiedlichen Ereignisverläufen zu erfassen.

Erfindungsgemäß enthält der erste Transponderdatensatz die Transponderkennung des ersten Transponders und den mindestens einen beschriebenen Ereignisverlauf. Eine Transponderkennung kann insbesondere eine systemweit eineindeutige Transponderkennung sein. Mit anderen Worten, der Transponder ist in dem Ortungssystem eindeutig an der Transponderkennung identifizierbar. Ein Transponder ist eingerichtet zum Aussenden eines Transpondersignals, das die Transponderkennung und vorzugsweise stets mindestens einen erfassten Ereignisparameterwert enthält. Der Transponderdatensatz kann auf dem mindestens einen durch die Empfangseinrichtung empfangenen Transpondersignal basieren, insbesondere auf einer Mehrzahl von periodisch durch den ersten Transponder ausgesendeten ersten Transpondersignalen. Vorzugsweise kann jedes dieser periodisch ausgesendeten und empfangenen Transpondersignale zumindest die Transponderkennung und mindestens einen erfassten (zeitabhängigen) Ereignisparameterwert enthalten.

Es versteht sich, dass ein Transponderdatensatz technisch aus einer Mehrzahl von Subtransponderdatensätzen gebildet sein kann, die das Erhaltungsmodul (sequentiell) erhalten kann.

Erfindungsgemäß wird der erhaltene erste Ereignisverlauf ausgewertet, basierend auf mindestens einem vordefinierten Ereigniskriterium. Das vordefinierte Ereigniskriterium kann in einem Datenspeicher des Ortungssystems gespeichert sein. Das Auswerten umfasst zumindest ein Bestimmen, vorzugsweise durch ein Auswertemodul der Datenverarbeitungsvorrichtung, ob der in dem erhaltenen ersten Transponderdatensatz enthaltene erste Ereignisverlauf das mindestens eine vordefinierte Ereigniskriterium erfüllt (oder nicht). Das vordefinierte Ereigniskriterium gibt insbesondere an, ob ein erhaltener Ereignisverlauf derart ist, dass ein Koppeln erfolgen soll.

Ferner erfolgt ein Koppeln bzw. Verknüpfen (auch als Pairing bezeichnet) erfindungsgemäß nur dann, wenn zumindest festgestellt wird, dass der erste Ereignisverlauf das vordefinierte Ereigniskriterium erfüllt. Dies meint gemäß der vorliegenden Erfindung insbesondere, dass ein Koppeln zumindest dann nicht erfolgt, wenn der erhaltene (erste) Ereignisverlauf das vordefinierte Ereigniskriterium nicht erfüllt. Ein Koppeln erfolgt nur dann, wenn zumindest das Ereigniskriterium erfüllt ist. Wie noch beschrieben wird, kann es bei bevorzugten Ausführungsformen erforderlich sein, dass zusätzlich weitere Bedingungen erfüllt sein müssen, damit ein erfindungsgemäßes Koppeln durchgeführt wird. Jedoch kann es für das Durchführen des Koppelns erfindungsgemäß auch ausreichend sein, wenn nur festgestellt wird, dass der erste Ereignisverlauf das vordefinierte Ereigniskriterium erfüllt.

Ein erfindungsgemäßes Koppeln umfasst das Generieren bzw. Erzeugen eines Kopplungsdatensatzes, enthaltend die Objektkennung des digitalen Objekts und die erste Transponderkennung des ersten Transponders, der an dem physischen Objekt befestigbar ist bzw. befestigt ist. Eine Objektkennung des physischen Objekts entspricht insbesondere der Transponderkennung des Transponders, der an diesem physischen Objekt befestigt ist. Vorzugsweise wird der erzeugte Kopplungsdatensatz gespeichert, insbesondere in einem Datenspeicher des Ortungssystems, insbesondere der Datenverarbeitungsvorrichtung. Durch das Generieren werden die Objektkennung des digitalen Objekts und die erste Transponderkennung miteinander verknüpft, insbesondere in eindeutiger Weise.

Anschließend kann in bekannter Weise eine Standortverfolgung des ersten Transponders und damit des entsprechenden physischen Objekts erfolgen. Insbesondere kann hierbei anhand des Orts der Status des Objekts (z.B. augenblicklicher Fertigungsstand eines Fertigungsauftrags im Fertigungsprozess) überwacht und insbesondere gesteuert werden.

Gemäß einer Ausführungsform des erfindungsgemäßen Kopplungsverfahrens kann das vordefinierte Ereigniskriterium mindestens einen Referenzereignisverlaufsbereich umfassen. Ein Referenzereignisverlauf (auch als Referenzsignalmuster bezeichnet) kann insbesondere einen Parameterwertbereich definieren, in dem ein erfasster Ereignisverlauf bzw. die gemessenen Ereignisparameterwerte des Ereignisverlaufs liegen müssen, damit bestimmt bzw. festgestellt wird, dass das Ereigniskriterium erfüllt ist. Beispielsweise kann ein Referenzereignisverlauf durch einen (berechneten) Idealereignisverlauf mit einem diesem Verlauf umgebenden Toleranzbereich gebildet sein. Alternativ oder zusätzlich kann ein Referenzereignisverlauf durch Auswerten einer Vielzahl von Testmessungen vorab bestimmt werden.

Das Bestimmen, ob der erste Ereignisverlauf das vordefinierte Ereigniskriterium erfüllt, kann vorzugsweise ein Vergleichen des ersten Ereignisverlaufs mit dem mindestens einen Referenzereignisverlaufsbereich umfassen. Der erste Ereignisverlauf kann das vordefinierte Ereigniskriterium zumindest dann erfüllen, wenn der erste Ereignisverlauf (insbesondere vollständig) in dem Referenzereignisverlaufsbereich liegt. Vollständig meint insbesondere, dass zwischen einem vordefinierten Startpunkt und einem vordefinierten Endpunkt des ersten Ereignisverlaufs alle gemessenen Ereignisparameterwerte des ersten Ereignisverlaufs innerhalb des Referenzereignisverlaufsbereichs liegen.

Gemäß einer bevorzugten Ausführungsform des erfindungsgemäßen Kopplungsverfahrens kann der mindestens eine Ereignissensor ein Bewegungssensor sein. Der Bewegungssensor kann eingerichtet sein zum Erfassen eines Bewegungsverlaufs bzw. Bewegungsprofils des ersten Transponders, insbesondere eines Beschleunigungsverlaufs, den der erste Transponder erfährt. Das vordefinierte Ereigniskriterium kann mindestens einen Referenzbewegungsverlaufsbereich umfassen. Insbesondere kann der mindestens eine Referenzbewegungsverlaufsbereich ein Referenzbeschleunigungsverlaufsbereich sein. Der Referenzbewegungsverlaufsbereich kann insbesondere eine spezifische Fallbewegung (beispielsweise definiert durch Länge und/oder max. und/oder min. Beschleunigung), eine spezifische Schüttelbewegung (beispielsweise definiert durch Länge und/oder max. und/oder min. Beschleunigung), eine spezifische Klopfbewegung (beispielsweise definiert durch Länge und/oder max. und/oder min. Beschleunigung und/oder min. einen Ruck (auch als jerk bezeichnet)) oder eine spezifische Drehbewegung (beispielsweise definiert durch Länge und/oder max. und/oder min. Beschleunigung) repräsentieren. Wie bereits beschrieben wurde, kann ein entsprechender spezifischer Verlauf jeweils entsprechende Toleranzwerte enthalten.

Das Ereigniskriterium ist insbesondere (nur) dann erfüllt, wenn der erfasste Bewegungsverlauf eine Fallbewegung, eine Schüttelbewegung, eine Klopfbewegung und/oder eine Drehbewegung ist, deren Messwerte in dem entsprechenden Referenzbewegungsverlaufsbereich (Klopfbewegungsreferenzverlauf, Schüttelbewegungsreferenzverlauf und/oder Drehbewegungsreferenzverlauf) liegen. In besonders zuverlässiger Weise kann ein Koppeln erfolgen. Es versteht sich, dass auch andere Arten von Referenzbewegungsverlaufsbereichen vordefiniert sein können.

Alternativ oder zusätzlich kann der mindestens eine Ereignissensor ein Taster sein. Der Taster kann eingerichtet sein zum Erfassen eines Tastverlaufs des ersten Transponders. Das vordefinierte Ereigniskriterium kann mindestens einen Referenzdruckverlaufsbereich umfassen. Beispielsweise kann vorgesehen sein, dass der Referenzdruckverlaufsbereich ein bestimmtes Tastmuster (beispielsweise definiert durch Länge und/oder max. und/oder min. Tastkraft) spezifiziert. Beispielsweise kann als Taster ein Knopf vorgesehen, der in einer definierten Weise (z.B. bestimmtes Tastmuster und/oder bestimmte Tastzeitdauer) betätigt werden muss.

Das Ereigniskriterium ist insbesondere (nur) dann erfüllt, wenn der erfasste Tastverlauf ein Tastmuster ist, dessen Messwerte in dem entsprechenden Referenztastverlaufsbereich liegen. In besonders zuverlässiger Weise kann ein Koppeln erfolgen.

Alternativ oder zusätzlich kann der mindestens eine Ereignissensor ein Temperatursensor sein. Der Temperatursensor kann eingerichtet sein zum Erfassen eines Temperaturverlaufs des ersten Transponders. Das vordefinierte Ereigniskriterium kann mindestens einen Referenztemperaturverlaufsbereich umfassen. Beispielsweise kann ein Erzeugen eines Temperaturprofils (beispielsweise definiert durch Länge und/oder max. und/oder min. Temperatur), z.B. mit mindestens einem Temperaturwechsel, durchgeführt werden, die ein Transponder erfährt. Das Ereigniskriterium ist insbesondere (nur) dann erfüllt, wenn der erfasste Temperaturverlauf ein Temperaturprofil ist, dessen Messwerte in dem entsprechenden Referenztemperaturverlaufsbereich liegen. In besonders zuverlässiger Weise kann ein Koppeln erfolgen.

Alternativ oder zusätzlich kann der mindestens eine Ereignissensor ein Helligkeitssensor sein. Der Helligkeitssensor kann eingerichtet sein zum Erfassen eines Helligkeitsverlaufs des ersten Transponders. Das vordefinierte Ereigniskriterium kann mindestens einen Referenzhelligkeitsverlaufsbereich umfassen. Beispielsweise kann ein Erzeugen eines Helligkeitsprofils (beispielsweise definiert durch Länge und/oder max. und/oder min. Helligkeit), z.B. mit mindestens einem Helligkeitswechsel, erfolgen, die ein Transponder erfährt. Das Ereigniskriterium ist insbesondere (nur) dann erfüllt, wenn der erfasste Helligkeitsverlauf ein Helligkeitsprofil ist, dessen Messwerte in dem entsprechenden Referenzhelligkeitsverlaufsbereich liegen. In besonders zuverlässiger Weise kann ein Koppeln erfolgen.

Gemäß einer weiteren Ausführungsform des erfindungsgemäßen Kopplungsverfahrens kann das Bereitstellen der Objektkennung des digitalen Objekts ein Auswählen eines digitalen Objekts aus einer Mehrzahl von in einem Objektspeicher des Ortungssystems gespeicherten digitalen Objekten umfassen. Beispielsweise kann das Ortungssystem ein Erzeugungsmodul zum Erzeugen von digitalen Objekten umfassen. Ein erzeugtes digitales Objekt kann in einem Objektspeicher des Ortungssystems (temporär) gespeichert werden.

Das Auswählen (bzw. auch das Erzeugen eines digitalen Objekts) kann auf mindestens einem vordefinierten Auswahlkriterium basieren. Das mindestens eine Auswahlkriterium kann ein Ortsereigniskriterium sein. Insbesondere kann das Ortungssystem mindestens zwei geographisch unterschiedliche Kopplungsbereiche umfassen, an denen unterschiedliche digitale Objekte jeweils gekoppelt werden sollen. Vorzugsweise kann der Transponderdatensatz mindestens ein Ortsdatum (z.B. geographische Angabe und/oder Antennenkennung der Empfangseinrichtung, die das jeweilige Transpondersignal empfangen hat) enthalten. Aus dem Ortsdatum kann zumindest der Kopplungsbereich abgeleitet werden, in dem sich der zu koppelnde Transponder befindet. Dann kann das digitale Objekt ausgewählt werden, welches für den identifizierten Ort bzw. Kopplungsbereich und den darin befindlichen Transponder verwendet werden soll. Dies kann sich beispielsweise aus einer Zuordnungstabelle ergeben, in dem jedem Kopplungsbereich eine Objektart zugeordnet ist. Die Zuordnungstabelle kann in der Datenverarbeitungsvorrichtung gespeichert sein.

Alternativ oder zusätzlich kann ein digitales Objekt ein Reihenfolgekriterium, wie beispielsweise ein Prioritätsdatum, Produktionsbereichsdatum, Nutzerdatum und/oder Kapazitätsdatum enthalten. Das Auswählen eines digitalen Objekts aus einer Mehrzahl von in einem Objektspeicher des Ortungssystems gespeicherten digitalen Objekten kann zusätzlich oder alternativ auf dem Prioritätsdatum, Produktionsbereichsdatum, Nutzerdatum und/oder Kapazitätsdatum basieren. Insbesondere kann eine Reihenfolgeregel vordefiniert sein, die die Auswahlreihenfolge festlegt, abhängig von dem Ortsereigniskriterium, dem Prioritätsdatum, Produktionsbereichsdatum, Nutzerdatum und/oder Kapazitätsdatum. Es versteht sich, dass alternativ oder zusätzlich ein manuelles Auswählen des zu koppelnden digitalen Objekts erfolgen kann. Ferner versteht es sich, dass ein Objektspeicher ein FIFO-Speicher (First In First Out Speicher) sein kann.

Gemäß einer bevorzugten Ausführungsform des erfindungsgemäßen Kopplungsverfahrens kann das Kopplungsverfahren ferner umfassen:
- Verwenden einer Ereigniserzeugungsvorrichtung zum Generieren eines ersten Ereignisverlaufs des ersten Transponders, wobei der generierte erste Ereignisverlauf das vordefinierte Ereigniskriterium erfüllt.

Die Ereigniserzeugungsvorrichtung kann eingerichtet sein zum Erzeugen eines (definierten) Ereignisverlaufs, den ein (erster) Transponder stets erfährt, wenn er die Ereigniserzeugungsvorrichtung durchläuft, zumindest beim Aktivieren der Ereigniserzeugungsvorrichtung.

Vorzugsweise kann die Ereigniserzeugungsvorrichtung eine Führung (beispielsweise ein Fallrohr mit mindestens einem Führungselement zum Ablenken eines sich durch das Fallrohr bewegenden Transponders, eine Gleitbahn mit einer bestimmten Form und/oder dergleichen) umfassen, eingerichtet zum Führen eines Transponders, zumindest bei Aktivieren der Ereigniserzeugungsvorrichtung. Beispielsweise kann ein Aktivieren ein Öffnen einer Tür bzw. Klappe, eines Vereinzelungsmoduls und/oder dergleichen umfassen. Dann kann der Transponder, geführt von der Führung, und beispielsweise aufgrund der auf den Transponder wirkenden Gewichtskraft, eine durch die Führung vordefinierte Bewegung erfahren (bis zu einem definierten Endpunkt, zum Beispiel in Form einer Aufnahme). Es versteht sich, dass eine Bewegung eines Transponders auch durch einen Aktor bewirkt werden kann.

Alternativ oder zusätzlich kann eine Ereigniserzeugungsvorrichtung mindestens eine Temperierungseinrichtung (z.B. eine Heizung und/oder Kühlung) umfassen. Die Temperierungseinrichtung kann eingerichtet sein zum Temperieren eines an der Temperierungseinrichtung (temporär) befindlichen, beispielsweise durch eine Führung vorbeigeführten Transponders. Insbesondere kann der Transponder hierdurch mindestens einen vordefinierten Temperaturwechsel erfahren.

Alternativ oder zusätzlich kann eine Ereigniserzeugungsvorrichtung mindestens eine Beleuchtungseinrichtung (z.B. eine Lampe und/oder ein Verschattungssystem) umfassen. Die Beleuchtungseinrichtung kann eingerichtet sein zum Beleuchten eines an der Beleuchtungseinrichtung (temporär) befindlichen, beispielsweise durch eine Führung vorbeigeführten Transponders. Insbesondere kann der Transponder hierdurch mindestens einen vordefinierten Helligkeitswechsel erfahren.

Alternativ oder zusätzlich kann eine Ereigniserzeugungsvorrichtung mindestens eine Tastereinrichtung (z.B. ein hydraulischer oder elektrischer Tastenimpulszeuger) umfassen. Die Tastereinrichtung kann eingerichtet sein zum Ausüben eines bestimmten Tastmusters auf den an der Tastereinrichtung (temporär) befindlichen, beispielsweise durch eine Führung vorbeigeführten Transponders. Insbesondere kann der Transponder hierdurch mindestens ein vordefiniertes Tastmuster erfahren.

In noch zuverlässigerer und fehlerfreier Weise kann bei einer Verwendung der Ereigniserzeugungsvorrichtung ein erfindungsgemäßes Koppeln erfolgen.

Gemäß einer weiteren bevorzugten Ausführungsform des erfindungsgemäßen Kopplungsverfahrens kann das Kopplungsverfahren ferner umfassen:
- Erhalten, insbesondere zusammen mit dem Transponderdatensatz des ersten Transponders, eines Signalstärkedatensatzes, enthaltend zumindest ein Signalstärkedatum mindestens eines durch die mindestens eine Empfangseinrichtung empfangenen Transpondersignals und/oder ein Orientierungsdatum des das Transpondersignal aussendenden ersten Transponders, wobei das Transpondersignal zumindest die erste Transponderkennung und mindestens einen durch den Ereignissensor erfassten Ereignisparameterwert enthält,
- Bestimmen, ob das mindestens eine Signalstärkedatum ein Signalstärkekriterium erfüllt und/oder ob das mindestens eine Orientierungsdatum ein Orientierungskriterium erfüllt,
- wobei das Koppeln des digitalen Objekts mit dem ersten Transponder nur dann erfolgt, wenn zumindest bestimmt wird, dass das mindestens eine Signalstärkedatum das Signalstärkekriterium erfüllt und/oder das mindestens eine Orientierungsdatum das Orientierungskriterium erfüllt.

Wie bereits beschrieben wurde, sendet ein jeweiliger Transponder ein Transpondersignal aus. Insbesondere kann der Transponder eingerichtet sein zum periodischen Aussenden von Transpondersignalen. Insbesondere jedes von einem Transponder ausgesendete Transpondersignal kann als Dateninhalt zumindest die Transponderkennung und vorzugsweise mindestens einen durch den mindestens einen Ereignissensor erfassten Ereignisparameterwert enthalten. Bei Varianten der Erfindung kann ein Ereignisparameterwert auch nur bei einer Änderung des gemessenen Ereignisparameterwerts in Vergleich zu mindestens einem vorherigen Ereignisparameterwert und/oder bei einer Überschreitung oder Unterschreitung eines vordefinierten Ereignisparametergrenzwert als Dateninhalt in dem Transpondersignal enthalten sein (beispielsweise ein Mindestbeschleunigungswert, eine Mindestbeschleunigungsänderung, ein Mindesttemperaturwert, eine Mindesttemperaturänderung, ein Mindestdruckwert, eine Mindestdruckänderung, ein Mindesthelligkeitswert, eine Mindesthelligkeitsänderung und/oder dergleichen). Wie bereits beschrieben wurde, können weiteren Daten als Dateninhalt in dem Transpondersignal enthalten sein, wie beispielsweise ein Zeitstempel.

Wie ferner bereits beschrieben wurde, kann die Empfangseinrichtung insbesondere ein Antennensignalauswertemodul umfassen. Das Antennensignalauswertemodul kann (unter anderem) eingerichtet sein zum Bestimmen eines Signalstärkedatums (z.B. RSSI (Received Signal Strength Indicator)) und/oder Orientierungsdatums (z.B. Richtung des sendenden Transponders, z.B. bestimmt mittels einer Auswertung des Angle of Arrival (AoA) des Transpondersignals). Alternativ oder zusätzlich können auch Signallaufzeiten durch das Antennensignalauswertemodul bestimmt werden.

Das mindestens eine Signalstärkedatum und/oder das mindestens eine Orientierungsdatum und/oder ein Laufzeitdatum kann/können durch das Antennensignalauswertemodul dem mindestens einen Transponderdatensatz hinzugefügt werden. Auch kann das mindestens eine Datum in einer separaten Nachricht an die Datenverarbeitungsvorrichtung übertragen werden.

Dann kann bestimmt werden, ob das mindestens eine Signalstärkedatum ein Signalstärkekriterium (vorzugsweise eine Mindestsignalstärke) erfüllt und/oder ob das mindestens eine Orientierungsdatum ein Orientierungskriterium (beispielsweise ein vordefinierter Richtungsbereich) erfüllt. Wenn ein entsprechendes Kriterium nicht erfüllt ist, kann beispielsweise davon ausgegangen werden, dass sich der entsprechende Transponder nicht in dem Kopplungsbereich befindet. Ein Koppeln mit einem digitalen Objekt kann somit unterbleiben. Mit anderen Worten, das Koppeln des digitalen Objekts mit dem ersten Transponder kann nur dann erfolgen, wenn zumindest bestimmt wird, dass das mindestens eine Signalstärkedatum das Signalstärkekriterium erfüllt und/oder das mindestens eine Orientierungsdatum das Orientierungskriterium erfüllt. Die Anzahl an fehlerhaften Kopplungen kann noch weiter reduziert werden.

Gemäß einer weiteren Ausführungsform des erfindungsgemäßen Kopplungsverfahrens kann aus den (zeitabhängigen) Ereignisparameterwerten einer Mehrzahl von (zeitlich nacheinander) empfangenen Transpondersignalen eines Transponders ein Ereignisverlauf für diesen Transponder bestimmt werden. Insbesondere dann, wenn vorzugsweise jedes Transpondersignal einen Ereignisparameterwert enthält und Transpondersignale periodisch mit dem jeweils augenblicklich erfassten Ereignisparameterwert ausgesendet werden, kann (in einfacher Weise) der Ereignisverlauf für diesen Transponder bestimmt werden.

Gemäß einer weiteren Ausführungsform des erfindungsgemäßen Kopplungsverfahrens kann das Generieren des Kopplungsdatensatzes ferner ein Erzeugen einer Kopplungsdatensatzkennung umfassen. Insbesondere kann für jeden generierten Kopplungsdatensatz eine systemweit eindeutige Kopplungsdatensatzkennung erzeugt werden. Mit anderen Worten, ein Kopplungsdatensatz kann im Ortungssystem eindeutig anhand der Kopplungsdatensatzkennung identifizierbar sein. Der Kopplungsdatensatz kann die Kopplungsdatensatzkennung enthalten. In sicherer Weise kann vorzugsweise jeder Kopplungsdatensatz anhand der jeweiligen Kopplungsdatensatzkennung identifiziert werden.

Gemäß einer weiteren Ausführungsform des erfindungsgemäßen Kopplungsverfahrens kann einem Kopplungsdatensatz über mindestens eine Schnittstelle mindestens ein weiteres Kopplungsdatum hinzugefügt werden. Das mindestens eine weitere Kopplungsdatum kann insbesondere ein Zustandsdatum des realen Objekts (bzw. der vorbeschriebene Status des Objekts), ein Prioritätsdatum, ein Produktionsbereichsdatum, ein Nutzerdatum, ein Kapazitätsdatum und/oder dergleichen sein. Das Zustandsdatum kann beispielsweise eine augenblickliche Stückzahl sein, einen augenblicklichen Status eines Fertigungsauftrags oder dergleichen angeben. Mit einem Prioritätsdatum kann insbesondere eine Reihenfolge festgelegt sein, beispielsweise die Abarbeitungsreihenfolge bei Fertigungsaufträgen.

Auch kann ein digitales Objekt einem definierten Produktionsbereich aus zumindest zwei unterschiedlichen Produktionsbereichen und/oder einem definierten Nutzer aus zumindest zwei unterschiedlichen Nutzern zugeordnet sein. Ein Kapazitätsdatum kann insbesondere die Zuordnung zu einer vorgegebenen Fertigungskapazität, wie beispielsweise einer Maschine, einem Arbeitsplatz oder einer Bearbeitungstechnologie anzeigen.

Gemäß einer weiteren bevorzugten Ausführungsform des erfindungsgemäßen Kopplungsverfahrens kann das Kopplungsverfahren ferner umfassen:
- Bewirken eines Ausgebens einer Kopplungsbestätigung bei einem Generieren des Kopplungsdatensatzes, insbesondere an den erfolgreich gekoppelten Transponder.

Beispielsweis kann der Transponder eine optische und/oder akustische Anzeige (z.B. LED, Lautsprecher etc.) umfassen. Nach einem Generieren eines Kopplungsdatensatzes kann die mindestens eine Anzeige derart (über eine Rückkanal zum entsprechenden Transponder) angesteuert werden, dass ein erfolgreiches Koppeln durch die Anzeige angezeigt wird (z.B. eine LED leuchtet (z.B. in einer bestimmten Farbe rot, grün etc.) und/oder ein vordefinierter Ton bzw. eine vordefinierte Tonfolge ausgegeben wird). Es versteht sich, dass alternativ oder zusätzlich auch eine haptische Rückkopplung möglich sein kann und/oder eine Rückkopplung an ein mobiles Endgerät eines Nutzers, der das Koppeln veranlasst hat.

Gemäß einer weiteren bevorzugten Ausführungsform des erfindungsgemäßen Kopplungsverfahrens kann das Kopplungsverfahren ferner umfassen:
- Bereitstellen des erzeugten Kopplungsdatensatzes,
- Erhalten eines zweiten durch die mindestens eine Empfangseinrichtung empfangenen Transponderdatensatzes eines zweiten Transponders,
- wobei der zweite Transponder einen Ereignissensor umfasst, eingerichtet zum Erfassen eines zweiten Ereignisverlaufs des zweiten Transponders,
- wobei der zweite Transponderdatensatz zumindest eine zweite Transponderkennung des zweiten Transponders und den erfassten zweiten Ereignisverlauf enthält,
- Bestimmen, ob der in dem erhaltenen zweiten Transponderdatensatz enthaltene zweite Ereignisverlauf ein vordefiniertes Ereigniskriterium erfüllt, und
- Koppeln des digitalen Objekts mit dem zweiten Transponder durch Hinzufügen der zweiten Transponderkennung zu dem bereitgestellten Kopplungsdatensatzes nur dann, wenn zumindest bestimmt wird, dass der zweite Ereignisverlauf das vordefinierte Ereigniskriterium erfüllt.

Insbesondere ist erkannt worden, dass es erforderlich sein kann, ein digitales Objekt mit zwei Transpondern bzw. zwei physischen Objekten zu verknüpfen. Mit anderen Worten, es kann erforderlich sein, eine Objektkennung eines digitalen Objekts mit einer ersten Transponderkennung eines ersten Transponders und einer zweiten Transponderkennung eines zweiten Transponders zu koppeln. Umfasst ein virtuelles bzw. digitales (ERP-)Objekt beispielsweise mehrere physische Objekte (z.B. Transportvorrichtungen und/oder Kisten und/oder Produkte), die einzeln verfolgt werden sollen, kann es notwendig sein, zwei oder mehr Transponder mit dem einen digitalen Objekt zu verknüpfen.

Insbesondere kann in analoger Weise zu dem vorbeschriebenen Bestimmen, ob der in dem erhaltenen ersten Transponderdatensatz enthaltene erste Ereignisverlauf ein vordefiniertes Ereigniskriterium erfüllt, bestimmt werden, ob der in dem erhaltenen zweiten Transponderdatensatz enthaltene zweite Ereignisverlauf das vordefinierte Ereigniskriterium erfüllt. Das Ereigniskriterium kann für das Bestimmen einen ersten Referenzereignisverlaufsbereich und einen zweiten Referenzereignisverlaufsbereich umfassen, die sich voneinander unterscheiden können. Auch kann nur ein einzelner Referenzereignisverlaufsbereich für beide Bestimmungsschritte vorgesehen sein.

Zudem kann in ähnlicher Weise zu dem vorbeschriebenen Koppeln des digitalen Objekts mit dem ersten Transponder der zweite Transponder mit dem digitalen Objekt gekoppelt werden, indem insbesondere dem bereitgestellten Kopplungsdatensatzes nur dann die zweite Transponderkennung hinzugefügt wird, wenn zumindest bestimmt wird, dass der zweite Ereignisverlauf das vordefinierte Ereigniskriterium erfüllt.

Bei einer automatisierten Ausführungsform (mit der Ereigniserzeugungsvorrichtung), ähnlich der oben beschriebenen, kann der erste Transponder mit der bereits bestehenden Kopplung in einem Lesebereich mit der Empfangseinrichtung positioniert werden. Anschließend kann die Ereigniserzeugungsvorrichtung (die beispielsweise ein Vereinzelungsmodul zum Vereinzeln einer Mehrzahl von verfügbaren Transpondern umfassen kann) dazu veranlasst werden, einen zweiten Transponder beispielsweise entlang einer durch eine Führung gebildete Fallstrecke zu bewegen, dessen Bewegungsmuster, wie oben beschrieben, erfasst wird. Die zweite Transponderkennung des zu koppelnden zweiten Transponders ist somit bekannt. Zudem ist die Objektkennung des digitalen Objekts aus der bereits bestehenden Kopplung des ersten Transponders im Lesebereich bekannt. Eine weitere Kopplung mit einem eigenen Kopplungsdatensatz und ggf. Objektdatensatzkennung kann erfolgen.

Optional kann über eine Schnittstelle die Anzahl der zu koppelnden Transponder eingegeben werden, um eine Mehrzahl von Transpondern automatisiert zu koppeln. Ebenfalls optional können den Kopplungsdatensätzen weitere Parameter über die Schnittstelle hinzugefügt werden (z.B. Teilmengen).

In entsprechender Weise können weitere Transponder (z.B. ein dritter Transponder bzw. eine dritte Transponderkennung) mit einem einzelnen digitalen Objekt bzw. der entsprechenden Objektkennung gekoppelt werden.

Gemäß einer besonders bevorzugten Ausführungsform des erfindungsgemäßen Kopplungsverfahrens kann das Kopplungsverfahren ferner umfassen:
- Erhalten eines zweiten durch die mindestens eine Empfangseinrichtung empfangenen Transponderdatensatzes eines zweiten Transponders,
- wobei der zweite Transponder einen Ereignissensor umfasst, eingerichtet zum Erfassen eines zweiten Ereignisverlaufs des zweiten Transponders,
- wobei der zweite Transponderdatensatz zumindest eine zweite Transponderkennung des zweiten Transponders und den erfassten zweiten Ereignisverlauf enthält,
- Bestimmen, ob der in dem erhaltenen zweiten Transponderdatensatz enthaltene zweite Ereignisverlauf ein vordefiniertes Ereigniskriterium erfüllt,
- Bestimmen, ob der zweite Ereignisverlauf und der erste Ereignisverlauf ein (vordefiniertes) Synchronizitätskriterium erfüllen, und
- Koppeln des digitalen Objekts mit dem ersten Transponder und dem zweiten Transponder durch ein Generieren des Kopplungsdatensatzes, enthaltend die Objektkennung des digitalen Objekts, die erste Transponderkennung des ersten Transponders und die zweite Transponderkennung des zweiten Transponders, nur dann, wenn zumindest bestimmt wird, dass der erste Ereignisverlauf das vordefinierte Ereigniskriterium erfüllt, der zweite Ereignisverlauf das vordefinierte Ereigniskriterium erfüllt und der erste Ereignisverlauf und der zweite Ereignisverlauf das Synchronizitätskriterium erfüllen.

Um in besonders zuverlässiger Weise ein Koppeln von zumindest zwei Transpondern mit einem digitalen Objekt zu ermöglich, kann zusätzlich insbesondere ein Synchronizitätskriterium vordefiniert sein. Insbesondere nur dann, wenn der erste Ereignisverlauf und der zweite Ereignisverlauf das Synchronizitätskriterium erfüllen, erfolgt ein Koppeln der Transponderkennungen mit der Objektkennung.

Das Synchronizitätskriterium ist vorzugsweise ein zeitliches Synchronizitätskriterium. Das Synchronizitätskriterium kann insbesondere eine Zeitvorgabe definieren, beispielsweise in Form eines Zeitfensters, in der sowohl der erste als auch der zweite Ereignisverlauf auftreten müssen, damit das Synchronizitätskriterium erfüllt wird. Beispielsweise kann das Synchronizitätskriterium vorgeben, dass der erste Ereignisverlauf und der zweite Ereignisverlauf im Wesentlichen gleichzeitig erfolgen müssen. Mit anderen Worten, der erste Transponder und der zweite Transponder müssen das Ereignis, wie eine Bewegung (beispielsweise gleichzeitiges Schütteln der beiden Transponder), einen Temperaturwechsel, einen Tastmusters (beispielsweise gleichzeitiges Drücken des jeweiligen Tasters), einen Helligkeitswechsel und/oder dergleichen gleichzeitig erfahren. Beispielsweise kann beim Bestimmen geprüft werden, ob der erste Ereignisverlauf und der zweite Ereignisverlauf in einem durch das Synchronizitätskriterium definierten Zeitfester stattgefunden haben. Nur wenn bestimmt wird, dass sowohl der erste Ereignisverlauf als auch der zweite Ereignisverlauf in dem vordefinierten Zeitfester liegen, kann ein Koppeln des digitalen Objekts mit dem ersten Transponder und dem zweiten Transponder durchgeführt werden durch ein Generieren des Kopplungsdatensatzes, enthaltend die Objektkennung des digitalen Objekts, die erste Transponderkennung des ersten Transponders und die zweite Transponderkennung des zweiten Transponders.

Bei einer Ausführungsform, bei dem ein manuelles Koppeln erfolgt, kann der erste Transponder mit der bestehenden Kopplung dadurch identifiziert werden, dass manuell ein erstes definiertes Signalbild erzeugt wird. Dies kann insbesondere zeitgleich entsprechend dem Synchronizitätskriterium mit oder vor der Erzeugung eines zweiten definierten Signalbildes des zweiten (neu) zu koppelnden Transponders erfolgen. Das erste und zweite Signalbild können gleich sein. Beispielsweise können beide Transponder zusammen, also insbesondere im Wesentlichen gleichzeitig, geschüttelt, geklopft, gedreht, gedrückt etc. werden.

Bei einer weiteren Ausführungsform des erfindungsgemäßen Kopplungsverfahren kann das Kopplungsverfahren ferner umfassen
- Verwenden einer ersten (zuvor beschriebenen) Ereigniserzeugungsvorrichtung zum Generieren eines ersten Ereignisverlaufs des ersten Transponders, wobei der generierte erste Ereignisverlauf das vordefinierte Ereigniskriterium erfüllt, und
- Verwenden einer zweiten (zuvor beschriebenen) Ereigniserzeugungsvorrichtung zum Generieren eines zweiten Ereignisverlaufs des zweiten Transponders, wobei der generierte zweite Ereignisverlauf das vordefinierte Ereigniskriterium erfüllt.

Insbesondere können zum Erfüllen des Synchronizitätskriterium die erste Ereigniserzeugungsvorrichtung und die zweite Ereigniserzeugungsvorrichtung (nahezu) gleichzeitig aktiviert werden (beispielsweise durch einen gemeinsamen Auslöser (z.B. eine Taste, ein Schalter, ein Hebel etc.). In besonders zuverlässiger Weise können zumindest zwei Transponderkennungen zweier Transponder mit einem digitalen Objekt gekoppelt werden.

Das beschriebene Prinzip kann ebenfalls angewendet werden, wenn eine oder mehrere bereits gekoppelte Transponder von der Objektkennung getrennt werden soll/en. Hierzu kann durch ein (vordefiniertes) Entkopplungsereigniskriterium ein anderer Referenzereignisverlauf als bei dem Ereigniskriterium definiert sein, z.B. ein längerer Tastendruck, ein anderer Bewegungsverlauf, ein anderer Temperaturverlauf, ein anderer Helligkeitsverlauf (jeweils verglichen mit dem Ereigniskriterium).

Das Kopplungsverfahren kann gemäß einer weiteren Ausführungsform vorzugsweise umfassen:
- Bereitstellen eines Kopplungsdatensatzes,
- Erhalten eines durch mindestens eine Empfangseinrichtung eines Ortungssystems empfangenen weiteren ersten Transponderdatensatzes des ersten Transponders,
- wobei der erste Transponderdatensatz zumindest die erste Transponderkennung des ersten Transponders und einen erfassten weiteren ersten Ereignisverlauf enthält,
- Bestimmen, ob der in dem erhaltenen Transponderdatensatz enthaltene weitere erste Ereignisverlauf ein vordefiniertes Entkopplungsereigniskriterium erfüllt, und
- Entkoppeln des ersten Transponders von dem digitalen Objekt durch Löschen der ersten Transponderkennung aus dem Kopplungsdatensatz, nur dann, wenn zumindest bestimmt wird, dass der weitere erste Ereignisverlauf das vordefinierte Entkopplungsereigniskriterium erfüllt.

Ein Löschen kann auch ein entsprechendes Kennzeichnen des Kopplungsdatensatzes umfassen. Wenn nur die erste Transponderkennung mit der Objektkennung gekoppelt ist, kann das Entkoppeln auch zu einem Löschen bzw. einem entsprechenden Kennzeichnen des Kopplungsdatensatzes führen. In einfacher und zuverlässiger Weise kann ein Entkoppeln durchgeführt werden.

Optional kann anschließend eine Rückmeldung der erfolgreichen Entkopplung durch eine optionale Anzeige des Transponders erfolgen, insbesondere in analoger Weise zum Anzeigen einer erfolgreichen Kopplung.

Gemäß einer weiteren bevorzugten Ausführungsform des erfindungsgemäßen Kopplungsverfahrens kann das Bereitstellen einer Objektkennung eines digitalen Objekts ein Bereitstellen einer weiteren Objektkennung eines weiteren digitalen Objekts umfassen. Mit anderen Worten, es können zwei oder mehr Objektkennungen von einer entsprechenden Anzahl an digitalen Objekten bereitgestellt werden. Ferner kann ein Koppeln des digitalen Objekts und des weiteren digitalen Objekts mit dem ersten Transponder durchgeführt werden durch ein Generieren eines Kopplungsdatensatzes, enthaltend die Objektkennung des digitalen Objekts, die weitere Objektkennung des weiteren digitalen Objekts und die erste Transponderkennung des ersten Transponders, nur dann, wenn zumindest bestimmt wird, dass der erste Ereignisverlauf das vordefinierte Ereigniskriterium erfüllt.

Zur Erzeugung einer hohen Informationsdichte bei der Nutzung von Ortungssystemen, insbesondere RTLS-Systemen, kann es sinnvoll sein, eine Transponderkennung zusätzlich zu einer digitalen Objektkennung mit weiteren Merkmalen zu verknüpfen. Dazu kann das weitere Merkmal zum Zeitpunkt der Kopplung ebenfalls erfasst werden. Dies kann in einem (einfachen) Fall durch eine manuelle Eingabe der Merkmalskennung über eine Schnittstelle erfolgen. Alternativ kann die Merkmalskennung an einem Lesegerät durch Einlesen oder Scannen eines elektronisch lesbaren Mediums erfasst werden. Beispielsweise kann sich ein Nutzer vor Entnahme eines Transponders identifizieren, z.B. mit einer jeweiligen Personalnummer, so dass das nächste digitale Objekt aus einem persönlichen Arbeitsvorrat dieses Nutzers zugewiesen werden kann. Dadurch kann dem Kopplungsdatensatz ein weiteres Merkmal hinzugefügt werden.

Wenn beispielsweise das digitale Objekt mit dem ersten Transponder gekoppelt wird, der insbesondere eine Erzeugung des digitalen Objektes ausgelöst hat, kann der Prozess des Koppelns vereinfacht werden. So kann das Kopplungsverfahren umfassen:
- Erzeugen, durch ein Erzeugungsmodul, von mindestens einem digitalen Objekt mit einer Objektkennung, automatisch ausgelöst durch einen RTLS-Trigger eines Transponders mit einer Transponderkennung (z.B. Verlassen eines Bereiches)
- Koppeln, durch das Kopplungsmodul, der Transponderkennung desjenigen Transponders, der den RTLS-Trigger ausgelöst hat und der Objektkennung (es ist wie oben beschrieben eine direkte oder eine indirekte Verknüpfung mittels einer gemeinsamen Kopplungsdatensatzkennung möglich).

Ferner kann bei einer Ausführungsform ein reales Objekt, beispielsweise eine Kanbanbox, bereits mit einem Transponder verknüpft sein. Wird die leere reale Kanbanbox in den mit der mindestens einen Empfangseinrichtung ausgeleuchteten Bereich eines Kanbanregals gebracht, kann ein (RTLS-)Trigger erzeugt werden. Dieser Trigger kann beispielsweise das Erzeugen eines digitalen Objekts auslösen, beispielsweise in Form eines Fertigungsauftrags. Wird die Kanbanbox aus dem Bereich des Kanbanregals genommen und in den Bereich Vormontage gebracht, kann wieder ein (RTLS-)Trigger erzeugt werden. Einer der Trigger kann als Auslöser definiert werden, das erzeugte digitale Objekt mit dem Transponder der Kanbanbox zu koppeln. Wird die gefüllte Kanbanbox wieder in das Kanbanregal gestellt und der entsprechende Trigger erzeugt, kann dem Ortungssystem der Abschluss des Fertigungsauftrags zurückgemeldet werden. Eine Entkopplung von digitalem Objekt und Transponder kann erfolgen.

Ein weiterer Aspekt der Erfindung ist ein Computerprogramm, umfassend Befehle, die bewirken, dass ein Prozessor einer Datenverarbeitungsvorrichtung die zuvor beschriebenen Verfahrensschritte des Kopplungsverfahrens ausführt oder zumindest steuert.

Das Computerprogramm, insbesondere die Instruktionen bzw.

Programmanweisungen, können in einem Computerprogrammprodukt gespeichert sein, insbesondere in einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann eine Datenverarbeitungsvorrichtung einen Hauptspeicher aufweisen, zum Beispiel einen flüchtigen oder nicht-flüchtigen Speicher, insbesondere einen Speicher mit wahlfreiem Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor der Datenverarbeitungsvorrichtung kann beispielsweise Zwischenergebnisse oder ähnliches in dem Hauptspeicher speichern.

Ein weiterer Aspekt der Erfindung ist eine Datenverarbeitungsvorrichtung für ein Ortungssystem, umfassend:
- mindestens ein Bereitstellungsmodul, eingerichtet zum Bereitstellen einer Objektkennung eines digitalen Objekts,
- mindestens ein Erhaltungsmodul, eingerichtet zum Erhalten eines durch mindestens eine Empfangseinrichtung eines Ortungssystems empfangenen ersten Transponderdatensatzes eines ersten Transponders,
- wobei der erste Transponder einen Ereignissensor umfasst, eingerichtet zum Erfassen eines ersten Ereignisverlaufs des ersten Transponders,
- wobei der erste Transponderdatensatz zumindest eine erste Transponderkennung des ersten Transponders und den erfassten ersten Ereignisverlauf enthält,
- mindestens ein Auswertemodul, eingerichtet zum Bestimmen, ob der in dem erhaltenen Transponderdatensatz enthaltene erste Ereignisverlauf ein vordefiniertes Ereigniskriterium erfüllt, und
- mindestens ein Kopplungsmodul, eingerichtet zum Koppeln des digitalen Objekts mit dem ersten Transponder durch ein Generieren eines Kopplungsdatensatzes, enthaltend die Objektkennung des digitalen Objekts und die erste Transponderkennung des ersten Transponders, nur dann, wenn zumindest bestimmt wird, dass der erste Ereignisverlauf das vordefinierte Ereigniskriterium erfüllt.

Die genannten Module der Datenverarbeitungsvorrichtung können Hardware- und/oder Software-Komponenten umfassen. Die Datenverarbeitungsvorrichtung kann beispielsweise mindestens einen Speicher mit Programmanweisungen eines Computerprogramms (z.B. des erfindungsgemäßen Computerprogramms) und mindestens einen Prozessor, ausgebildet zum Ausführen von Programmanweisungen aus dem mindestens einen Speicher, umfassen. Dementsprechend soll gemäß der Erfindung auch zumindest eine Datenverarbeitungsvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor die Datenverarbeitungsvorrichtung zu veranlassen, das Verfahren gemäß der Erfindung auszuführen und/oder zu steuern.

Die Datenverarbeitungsvorrichtung kann insbesondere das zuvor beschriebene Kopplungsverfahren ausführen bzw. steuern.

Ein weiterer Aspekt der Erfindung ist ein Ortungssystem. Das Ortungssystem umfasst eine zuvor beschriebene Datenverarbeitungsvorrichtung. Das Ortungssystem umfasst mindestens eine (zuvor beschriebene) Empfangseinrichtung, eingerichtet zum Empfangen von Transpondersignalen. Das (zuvor beschriebene) Ortungssystem kann den mindestens einen Transponder umfassen.

Gemäß einer bevorzugten Ausführungsform des erfindungsgemäßen Ortungssystems kann das Ortungssystem ferner mindestens eine (zuvor beschriebene) Ereigniserzeugungsvorrichtung umfassen. Die mindestens eine Ereigniserzeugungsvorrichtung kann eingerichtet sein zum Generieren eines ersten Ereignisverlaufs des ersten Transponders, wobei der generierte erste Ereignisverlauf das vordefinierte Ereigniskriterium erfüllt.

Ein noch weiterer Aspekt der Erfindung ist eine Verwendung einer Ereigniserzeugungsvorrichtung in einem zuvor beschriebenen Kopplungsverfahren zum Generieren des ersten Ereignisverlaufs des ersten Transponders, wobei der generierte erste Ereignisverlauf das vordefinierte Ereigniskriterium erfüllt.

Es sei angemerkt, dass durch die Begriffe "erster", "zweiter" etc. anmeldungsgemäß keine Reihenfolge festgelegt ist, sondern dass die genannten Begriffe lediglich als Bezeichnung von unterschiedlichen Elementen und/oder Schritten dienen.

Wie bereits beschrieben wurde, kann ein zuvor beschriebenes Modul, eine Vorrichtung etc. zumindest teilweise Hardwareelemente (z.B. Prozessor, Speichermittel etc.) und/oder zumindest teilweise Softwareelemente (z.B. ausführbaren Code) umfassen.

Die Merkmale der Verfahren, Computerprogramme,

Datenverarbeitungsvorrichtungen, Ortungssysteme und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren, das erfindungsgemäße Computerprogramm, die erfindungsgemäße Datenverarbeitungsvorrichtung, das erfindungsgemäße Ortungssystem und die erfindungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1a: eine schematische Ansicht eines Beispiels eines Ortungssystems zur Eigenortung,
- Fig. 1b: eine schematische Ansicht eines Beispiels eines Ortungssystems zur Fremdortung,
- Fig. 2: eine schematische Ansicht eines Ausführungsbeispiels eines Ortungssystems gemäß der vorliegenden Erfindung mit einem Ausführungsbeispiel einer Datenverarbeitungsvorrichtung gemäß der vorliegenden Erfindung,
- Fig. 3: ein Diagramm eines Ausführungsbeispiels eines Kopplungsverfahrens gemäß der vorliegenden Erfindung,
- Fig. 4a-d: schematische Ansichten von Ausführungsbeispielen von Ereigniserzeugungsvorrichtungen, die insbesondere in einem Ausführungsbeispiel eines Kopplungsverfahrens gemäß der vorliegenden Erfindung verwendbar sind,
- Fig. 5: ein Diagramm eines weiteren Ausführungsbeispiels eines Kopplungsverfahrens gemäß der vorliegenden Erfindung,
- Fig. 6: ein Diagramm eines weiteren Ausführungsbeispiels eines Kopplungsverfahrens gemäß der vorliegenden Erfindung, und
- Fig. 7: ein Diagramm eines weiteren Ausführungsbeispiels eines Kopplungsverfahrens gemäß der vorliegenden Erfindung.

Ähnliche Bezugszeichen bezeichnen nachfolgend ähnliche Elemente.

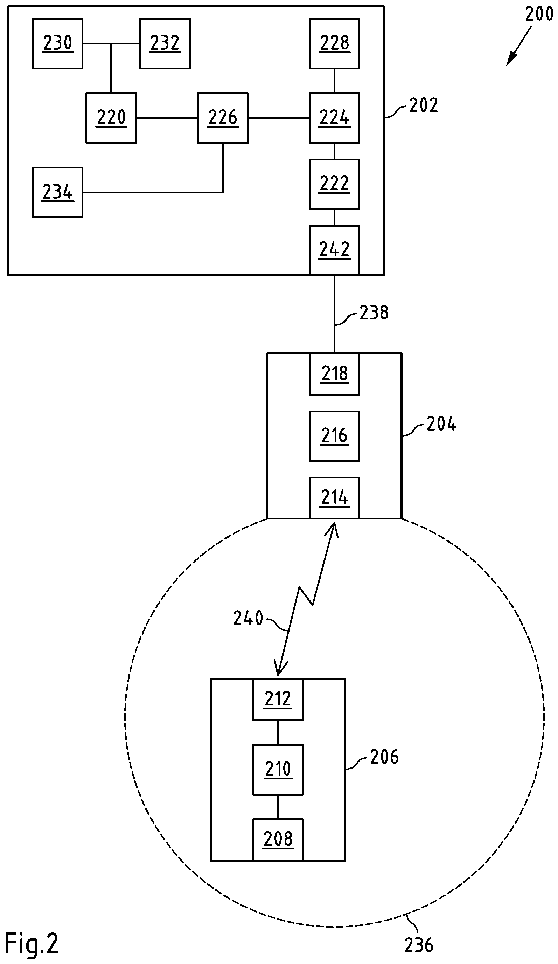

Die Figur 2 zeigt eine schematische Ansicht eines Ausführungsbeispiels eines Ortungssystems 200 gemäß der vorliegenden Erfindung mit einem Ausführungsbeispiel einer Datenverarbeitungsvorrichtung 202 gemäß der vorliegenden Erfindung.

Das Ortungssystem 200 ist insbesondere ein RTLS-Ortungssystem. Die Datenverarbeitungsvorrichtung 202 umfasst einen (nicht gezeigten) Prozessor und zumindest einen (nicht gezeigten) Speicher mit Programmanweisungen bzw. ausführbaren (Software-)Modulen 220, 224 und 226, wobei der zumindest eine Speicher und die Programmanweisungen insbesondere eingerichtet sind, gemeinsam mit dem zumindest einen Prozessor die Datenverarbeitungsvorrichtung 202 zu veranlassen, das (computerimplementierte) Verfahren gemäß der Erfindung auszuführen und/oder zu steuern.

Beispielsweise kann die Datenverarbeitungsvorrichtung 202 ein Hintergrundsystem bilden bzw. durch einen Server oder durch mehrere (verteilt angeordnete) Server und/oder ein Cloudsystem gebildet sein.

Ferner umfasst das Ortungssystem 200 mindestens eine Empfangseinrichtung 204. Vorzugsweise kann ein Ortungssystem 200 eine Vielzahl von geographisch verteilt angeordneten Empfangseinrichtungen 204 umfassen, um insbesondere einen vordefinierten bzw. abgeschlossenen Bereich zu überwachen, wie ein Gebäude oder eine Gebäudeanordnung mit beispielsweise einer Mehrzahl von verteilt und miteinander verbundener Gebäudeteile. Ausdrücklich kann das Ortungssystem aber auch eine Außenfläche oder mehrere Außenflächen eines Gebäudes oder einer Mehrzahl von Gebäuden umfassen; ebenso wie ein Ortungssystem mehrere geografisch getrennte Standorte umfassen kann, deren Verbindungen (Verkehrswege, Straßen, Schienen, Wasserstraßen, Flugrouten, etc.) nicht von dem Ortungssystem erfasst sind.

Eine Empfangseinrichtung 204 ist insbesondere eine Nahfeld-Empfangseinrichtung. Bevorzugt ist die Empfangseinrichtung 204 eine BLE-basierte Empfangseinrichtung. Bei Varianten der Anmeldung kann die Empfangseinrichtung 204 auch eine UWBbasierte Empfangseinrichtung, RFID-basierte Empfangseinrichtung, WiFi-basierte Empfangseinrichtung oder dergleichen sein.

Die Empfangseinrichtung 204 umfasst insbesondere eine Antenne 214, ein Antennensignalauswertemodul 216 und ein Kommunikationsmodul 218. Die Antenne 214 weist insbesondere eine bestimmte Empfangsreichweite auf, die von der eingesetzten Technologie und insbesondere den in dem Ortungssystem 200 eingesetzten Transpondern 206 abhängen kann. Insbesondere ist die Empfangseinrichtung 204 bzw. die Antenne 214 derart angeordnet, dass ein vordefinierter, abgegrenzter Kopplungsbereich 236 abgedeckt wird, wie ein bestimmter Raum, Teilraum etc. Mit anderen Worten, die Empfangsreichweite der Empfangseinrichtung 204 kann im Wesentlichen den Kopplungsbereich 236 abdecken bzw. diesen bilden.

Wie zu erkennen ist, ist ein (erster) Transponder 206 in der Figur 2 dargestellt. Vorzugsweise kann das Ortungssystem 200 den mindestens einen Transponder 206 umfassen, insbesondere eine Vielzahl von Transpondern 206. Es versteht sich, dass hinsichtlich der verwendeten Technologie der mindestens eine Transponder 206 und die mindestens eine Empfangseinrichtung 204 aufeinander abgestimmt sind, also vorzugsweise beide BLE-basiert arbeiten.

Der mindestens eine Transponder 206 ist insbesondere ein Beacon, vorzugsweise ein BLE-Beacon. Der Transponder 206 umfasst insbesondere mindestens einen Ereignissensor 208, ein Verarbeitungsmodul 210 und ein Sendemodul 212. Vorzugsweise kann der Transponder 206 ein aktiver Transponder 206 sein und insbesondere eine (nicht gezeigte) Batterie (oder dergleichen) umfassen, eingerichtet zum Versorgen der genannten Transponderelemente 208, 210 und 212 mit elektrischer Energie.

Der mindestens eine Ereignissensor 208 kann ein Beschleunigungssensor, Temperatursensor, Helligkeitssensor, Taster und/oder dergleichen sein. Bei Varianten der Erfindung können zwei oder mehr Ereignissensoren vorgesehen sein. Ein Ereignissensor 208 ist zum (kontinuierlichen) Messen eines Ereignisparameters eingerichtet. Insbesondere kann durch einen Ereignissensor 208 ein Ereignisverlauf erfasst werden, den der Transponder 206 erfährt. Beispielsweise kann durch einen Beschleunigungssensor ein Bewegungsverlauf und/oder Beschleunigungsverlauf gemessen werden, den der Transponder 206 erfährt. Durch einen Temperatursensor kann ein Temperaturverlauf gemessen werden, den der Transponder 206 erfährt. Durch einen Taster kann ein Tastmuster gemessen werden, den der Transponder 206 erfährt. Alternativ oder zusätzlich kann durch einen Helligkeitssensor ein Helligkeitsverlauf gemessen werden, den der Transponder 206 erfährt.

Die gemessenen (zeitabhängigen) Ereignisparameterwerte können durch den Ereignissensor 208 dem Verarbeitungsmodul 210 bereitgestellt werden. Das Verarbeitungsmodul 210 ist insbesondere eingerichtet zum Generieren von Transpondersignalen. Ein durch das Sendemodul 212 (zumindest umfassend eine Antenne) über ein drahtloses Netz 240 ausgesendetes Transpondersignal kann zumindest die Transponderkennung des Transponders 206 und mindestens einen gemessenen Ereignisparameterwert enthalten. Beispielsweise kann das Verarbeitungsmodul 210 periodisch Transpondersignale erzeugen, wobei jedes Transpondersignal die Transponderkennung des Transponders 206 und den mindestens einen (augenblicklich) gemessenen Ereignisparameterwert enthalten kann. Es versteht sich, dass ein Transpondersignal mindestens ein weiteres Datum enthalten kann, wie einen Zeitstempel. Die periodisch generierten Transpondersignale können durch das Sendemodul 212 periodisch versendet werden.

Die mindestens eine Empfangseinrichtung 204 empfängt die ausgesendeten Transpondersignale über die mindestens eine Antenne 214. Wie bereits beschrieben wurde, kann das Antennensignalauswertemodul 216 das mindestens eine Transpondersignal verarbeiten und insbesondere auswerten. Vorzugsweise kann das Antennensignalauswertemodul 216 den Transponderdatensatz bilden, basierend auf dem mindestens einen empfangenen Transpondersignal, vorzugsweise auf einer Mehrzahl von periodisch (und nacheinander) empfangenen Transpondersignalen desselben Transponders 206.

Insbesondere kann aus den einzelnen zeitlich aufeinander folgenden Ereignisparameterwerten der periodisch empfangenen Transpondersignale ein Ereignisverlauf des Transponders 206 generiert werden. Mit anderen Worten, das Antennensignalauswertemodul 216 kann eingerichtet sein zum Generieren eines Transponderdatensatzes, der zumindest eine Transponderkennung des ersten Transponders 206 und den erfassten ersten Ereignisverlauf des ersten Transponders 206 enthält.

Das Kommunikationsmodul 218 der Empfangseinrichtung 204 kann zum Übertragen des Transponderdatensatzes über eine (drahtlose und/oder drahtgebundene) Kommunikationsverbindung 238 an ein Kommunikationsmodul 242 der Datenverarbeitungsvorrichtung 202 eingerichtet sein.

Bei Varianten der Anmeldung können die empfangenen Transpondersignale bzw. der jeweilige Dateninhalt durch das Kommunikationsmodul 218 der Empfangseinrichtung 204 an das Kommunikationsmodul 242 der Datenverarbeitungsvorrichtung 202 weitergeleitet werden. Dann kann beispielsweise das Kommunikationsmodul 242 der Datenverarbeitungsvorrichtung 202 eingerichtet sein zum Generieren eines Transponderdatensatzes, wie beschrieben wurde.

Vorzugsweise zusätzlich kann das Antennensignalauswertemodul 216 eingerichtet sein zum Bestimmen eines Signalstärkedatums (z.B. RSSI (Received Signal Strength Indicator)) und/oder eines Orientierungsdatums (z.B. Richtung des sendenden Transponders, z.B. bestimmt mittels einer Auswertung des Angle of Arrival (AoA) des mindestens einen durch die Antenne 214 der Empfangseinrichtung 204 empfangenen Transpondersignals). Das mindestens eine Signalstärkedatum und/oder das mindestens eine Orientierungsdatum kann durch das Antennensignalauswertemodul 216 dem mindestens einen Transponderdatensatz hinzugefügt werden. Dann kann beispielsweise durch ein Auswertemodul 224 der Datenverarbeitungsvorrichtung 202 bestimmt werden, ob das mindestens eine Signalstärkedatum ein Signalstärkekriterium (vorzugsweise eine Mindestsignalstärke) erfüllt und/oder ob das mindestens eine Orientierungsdatum ein Orientierungskriterium (beispielsweise ein vordefinierter Richtungsbereich) erfüllt. Wenn ein entsprechendes Kriterium nicht erfüllt wird, kann beispielsweise davon ausgegangen werden, dass sich der entsprechende Transponder 206 nicht in dem Kopplungsbereich 236 befindet. Ein Koppeln kann somit unterbleiben.

Bei bevorzugten Varianten der Erfindung kann diese Vorfilterung bereits in der Empfangseinrichtung 204 durchgeführt werden. Ein Transponderdatensatz kann beispielsweise nur dann erzeugt und an die Datenverarbeitungsvorrichtung 202 übertragen werden, wenn das Antennensignalauswertemodul 216 feststellt, dass das mindestens eine Signalstärkedatum das Signalstärkekriterium (vorzugsweise eine Mindestsignalstärke) erfüllt und/oder das mindestens eine Orientierungsdatum das Orientierungskriterium (beispielsweise ein vordefinierter Richtungsbereich) erfüllt. Die zu übertragene Datenmenge kann hierdurch insbesondere reduziert werden. Zudem können die in der Datenverarbeitungsvorrichtung durchzuführenden Auswertevorgänge reduziert werden.

Die dargestellte Datenverarbeitungsvorrichtung 202 umfasst mindestens ein Bereitstellungsmodul 220, mindestens ein Erhaltungsmodul 222, mindestens ein Auswertemodul 224 und mindestens ein Kopplungsmodul 226.

Das Bereitstellungsmodul 220 ist eingerichtet zum Bereitstellen einer Objektkennung eines digitalen Objekts. Beispielsweise können in einem Objektspeicher 230 eine Mehrzahl von digitalen Objekten, jeweils zumindest enthaltend eine Objektkennung (und ggf. weitere Daten, wie beschrieben wurde), gespeichert sein, die von dem Bereitstellungsmodul 220 insbesondere auf Anfrage, also insbesondere (nur) dann, wenn eine Kopplung erfolgen soll, bereitgestellt werden.

Ein digitales Objekt kann insbesondere durch ein Erzeugungsmodul 232 erzeugt werden, beispielsweise vorab oder insbesondere auf Anfrage, also insbesondere (nur) dann, wenn eine Kopplung erfolgen soll. Dann kann das Bereitstellungsmodul 220, beispielsweise via Objektspeicher 230, der als Zwischenspeicher dienen kann, das erzeugte Objekt für ein Koppeln bereitstellen, insbesondere dem Kopplungsmodul 226 bereitstellen. Wie bereits beschrieben wurde, kann das Bereitstellen eines digitalen Objekts ein Auswählen eines digitalen Objekts aus einer Mehrzahl von verfügbaren digitalen Objekten umfassen, beispielsweise abhängig von einer Ortsangabe (und/oder anderen Daten), wie beschrieben wurde.

Das mindestens eine Erhaltungsmodul 222 ist eingerichtet zum Erhalten eines durch die mindestens eine Empfangseinrichtung 204 empfangenen ersten (zuvor beschriebenen) Transponderdatensatzes eines ersten Transponders 206. Das Erhaltungsmodul 222 kann den erhaltenen Transponderdatensatz dem mindestens einen Auswertemodul 224 zur weiteren Auswertung zur Verfügung stellen.

Das Auswertemodul 224 ist zumindest eingerichtet zum Bestimmen, ob der in dem erhaltenen Transponderdatensatz enthaltene erste Ereignisverlauf ein vordefiniertes Ereigniskriterium erfüllt (oder nicht). Beispielsweise kann das Ereigniskriterium in einem Datenspeicher 228 der Datenverarbeitungsvorrichtung 202 gespeichert sein, auf den das Auswertemodul 224 zugreifen kann. Vorzugsweise kann das Ereigniskriterium einen oder mehrere Referenzereignisverlaufsbereich/e umfassen.

Das Auswertemodul 224 kann insbesondere eingerichtet sein zum Vergleichen des erhaltenen Ereignisverlaufs (bzw. die entsprechenden zeitlich aufeinanderfolgenden Ereignisparameterwerte) mit dem mindestens einen Referenzereignisverlaufsbereichs (z.B. definiert durch Grenzkurven, Referenzereignisparameterwerte etc.). Wenn das Auswertemodul 224 beispielsweise feststellt, dass der erhaltene Ereignisverlauf in dem Referenzereignisverlaufsbereich liegt, kann bestimmt werden, dass der erhaltene Ereignisverlauf das Ereigniskriterium erfüllt. Wenn das Auswertemodul 224 beispielsweise feststellt, dass der erhaltene Ereignisverlauf nicht in dem Referenzereignisverlaufsbereich liegt, kann bestimmt werden, dass der erhaltene Ereignisverlauf das Ereigniskriterium nicht erfüllt.

Wie bereits beschrieben wurde, kann der mindestens eine Ereignisverlauf ein Bewegungsverlauf, ein Temperaturverlauf, ein Tastmuster und/oder ein Helligkeitsverlauf sein. Der mindestens eine Referenzereignisverlaufsbereich kann in entsprechender Weise mindestens ein Referenzbewegungsverlaufsbereich, ein Referenztemperaturverlaufsbereich, ein Referenztastverlaufsbereich und/oder ein Referenzhelligkeitsverlaufsbereich sein.

Das mindestens eine Kopplungsmodul 226 ist eingerichtet zum Koppeln des digitalen Objekts mit dem ersten Transponder 206 durch ein Generieren eines Kopplungsdatensatzes, enthaltend die Objektkennung des digitalen Objekts und die erste Transponderkennung des ersten Transponders 206, nur dann, wenn zumindest bestimmt wird, dass der erste Ereignisverlauf das vordefinierte Ereigniskriterium erfüllt. Wie bereits ausgeführt wurde, meint dies insbesondere, dass bei weiteren Ausführungsbeispielen noch mindestens eine weitere Bedingung bzw. ein weiteres Kriterium erfüllt sein muss, jedoch eine Kopplung nur dann erfolgt, wenn zumindest das Ereigniskriterium erfüllt ist.

Der generierte Kopplungsdatensatz kann insbesondere in einem weiteren Datenspeicher 234 der Datenverarbeitungsvorrichtung 202 (oder dem Datenspeicher 228) gespeichert werden. Anschließend kann in bekannter Weise das Ortungssystem 200 zur Verfolgung von Objekten und/oder Personen eingesetzt werden, an dem der Transponder 206 angebracht worden ist.

Nach einer Beendigung eines Fertigungsauftrags und/oder dergleichen kann ein zuvor beschriebenes Entkoppeln erfolgen. Ein Entkopplungsereigniskriterium kann insbesondere in dem Datenspeicher 228 gespeichert sein.

Bei Varianten der Erfindung kann zudem ein Transponder 206 über eine (nicht gezeigte) Anzeige verfügen. Über einen (nicht gezeigten) Rückkanal kann beispielsweise das Kommunikationsmodul 242 den Transponder 206 derart ansteuern, dass ein erfolgreiches Koppeln des Transponders 206 durch die Anzeige des Transponders 206 angezeigt wird.

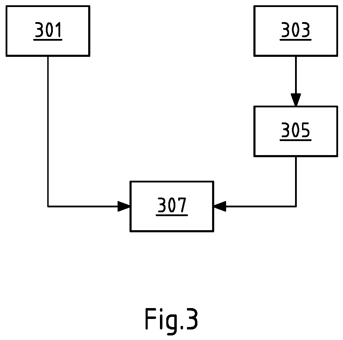

Die Funktionsweise des Ortungssystems 200 bzw. der Datenverarbeitungsvorrichtung 202 wird nachfolgend näher mit Hilfe der Figur 3 beschrieben. Die Figur 3 zeigt ein Diagramm eines Ausführungsbeispiels eines Kopplungsverfahrens gemäß der vorliegenden Erfindung.

In einem Schritt 301 erfolgt ein Bereitstellen einer Objektkennung eines digitalen Objekts, wie zuvor beschrieben wurde. In Schritt 303 erfolgt ein Erhalten eines durch mindestens eine Empfangseinrichtung eines Ortungssystems empfangenen ersten Transponderdatensatzes eines ersten Transponders, wie zuvor beschrieben wurde. Beispielsweise kann das Erhalten des Transponderdatensatz das Bereitstellen der Objektkennung auslösen.

In einem Schritt 305 erfolgt ein Bestimmen, ob der in dem erhaltenen ersten Transponderdatensatz enthaltene erste Ereignisverlauf ein vordefiniertes Ereigniskriterium erfüllt, wie zuvor beschrieben wurde. Bei Varianten der Erfindung kann der Schritt 301 erst dadurch ausgelöst werden, dass das Ereigniskriterium erfüllt ist.

In Schritt 307 erfolgt ein Koppeln des digitalen Objekts mit dem ersten Transponder durch ein Generieren eines Kopplungsdatensatzes, enthaltend die Objektkennung des digitalen Objekts und die erste Transponderkennung des ersten Transponders, nur dann, wenn zumindest bestimmt wird, dass der erste Ereignisverlauf das vordefinierte Ereigniskriterium erfüllt, wie zuvor beschrieben wurde.

Wie bereits beschrieben wurde, kann ein Ereignisverlauf eines Transponders manuell erzeugt werden, beispielsweise indem ein Nutzer den Transponder in einer definierten Weise bewegt, einen Taster in definierter Weise betätigt, einen Helligkeitssensor und/oder einen Temperatursensor in definierter Weise beeinflusst. Alternativ kann ein definierter Ereignisverlauf, den ein Transponder erfährt, automatisch erzeugt werden, indem eine Ereigniserzeugungsvorrichtung zum Generieren eines Ereignisverlaufs des ersten Transponders verwendet wird.

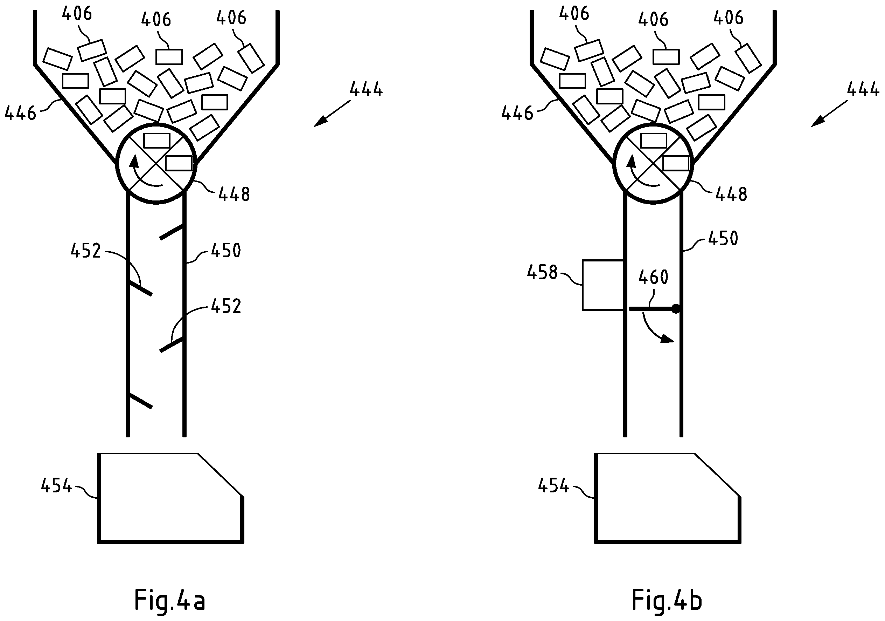

Die Figuren 4a-d zeigen schematische Ansichten von Ausführungsbeispielen von Ereigniserzeugungsvorrichtungen, die insbesondere in einem Ausführungsbeispiel eines Kopplungsverfahrens gemäß der vorliegenden Erfindung verwendbar sind, wie beispielsweise in der Figur 3 beschrieben ist. Insbesondere kann ein Ortungssystem, wie das in der Figur 2 beschriebene Ortungssystem, zusätzlich mindestens eine Ereigniserzeugungsvorrichtung umfassen.

In der Figur 4a ist eine Ereigniserzeugungsvorrichtung 444 gezeigt, die eingerichtet ist zum Generieren eines definierten Bewegungsverlaufs eines Transponders 406.

Beispielsweise kann die Ereigniserzeugungsvorrichtung 444 einen Transponderspeicher 446, enthaltend eine Vielzahl verfügbarer Transponder 406, und ein Vereinzelungsmodul 448 umfassen, das beispielsweise über eine (nicht gezeigte) Nutzerschnittstelle betätigt bzw. ausgelöst werden kann, damit insbesondere ein Transponder einen definierten Ereignisverlauf erfährt.

Ferner umfasst die Ereigniserzeugungsvorrichtung 444 eine Führung 450 mit optionalen Führungselementen 452, beispielhaft in Form eines Fallrohrs. Bei einer Betätigung bzw. Aktivierung der Ereigniserzeugungsvorrichtung 444 fällt genau ein Transponder 406 aufgrund der Schwerkraft die Führung 450 hinunter und erfährt entsprechend der Ausgestaltung der Führung 450 und ggf. der Führungselemente 452 eine definierte Bewegung und insbesondere Beschleunigung. Es versteht sich, dass die Ausgestaltung der Führung 450 und ggf. der Führungselemente 452 beliebig sein kann, solange eine definierte und stets im Wesentliche gleiche Bewegung und insbesondere Beschleunigung erzeugt wird. Ferner ist zum Aufnehmen des Transponders 406 eine Aufnahme 454 unter der Führung 450 angeordnet.

Ein Referenzbewegungsverlaufsbereich kann durch einen Kalibrierungslauf ermittelt werden, bei dem eine Vielzahl von Transpondern die Führung 450 durchläuft und die erfassten Bewegungsverläufe bzw. -muster ausgewertet werden.

Im Unterschied zur Ereigniserzeugungsvorrichtung 444 nach Figur 4a ist in der Figur 4b eine Ereigniserzeugungsvorrichtung 444 gezeigt, die eingerichtet ist zum Generieren eines definierten Temperaturverlaufs eines Transponders 406. Hierzu kann eine Temperierungseinrichtung 458 (z.B. Heizung und/oder Kühlung) in der Ereigniserzeugungsvorrichtung 444 angeordnet sein, um einen auf der Klappe 460 (temporär) liegenden Transponder 406 für eine vordefinierte Zeitdauer zu temperieren. Nach Ablauf der vordefinierten Zeitdauer kann automatisch die Klappe 460 geöffnet werden, so dass der Transponder 406 in die Aufnahme 454 gelangt. Auch hier versteht es sich, dass andere Ausgestaltungen möglich sind, solange ein definierter und stets im Wesentlichen gleicher Temperaturverlauf generiert wird. Bei Varianten der Erfindung kann zusätzlich die Umgebungstemperatur in die Auswertung mit einfließen.

Ferner kann ein Referenztemperaturverlaufsbereich durch einen Kalibrierungslauf ermittelt werden, bei dem eine Vielzahl von Transpondern temperiert wird und die erfassten Temperaturverläufe bzw. -muster ausgewertet werden.

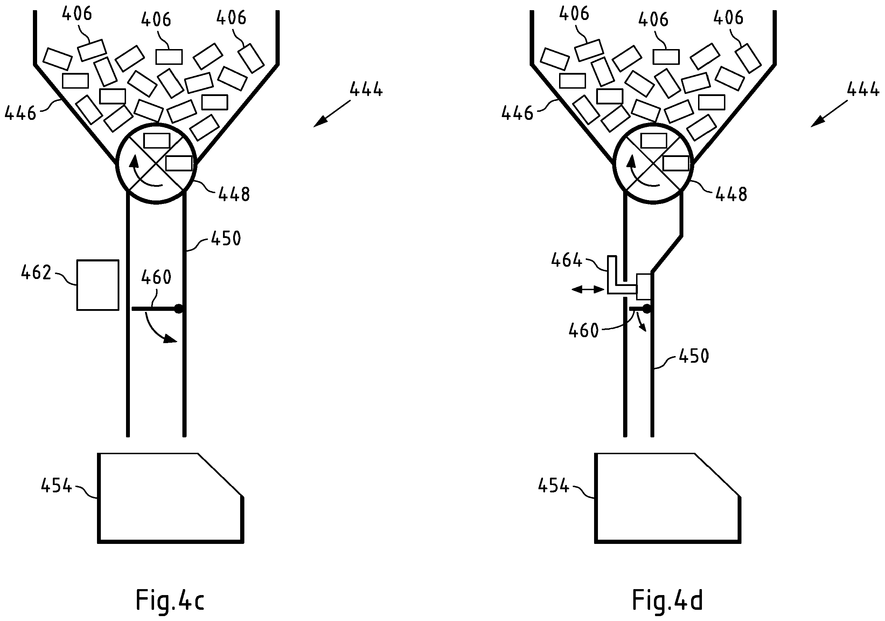

Im Unterschied zur Ereigniserzeugungsvorrichtung 444 nach Figur 4a oder 4b ist in der Figur 4c eine Ereigniserzeugungsvorrichtung 444 gezeigt, die eingerichtet ist zum Generieren eines definierten Helligkeitsverlaufs eines Transponders 406. Hierzu kann eine Beleuchtungseinrichtung 462 (z.B. Lampe und/oder Verschattungssystem) in der Ereigniserzeugungsvorrichtung 444 angeordnet sein, um einen auf der Klappe 460 liegenden Transponder für eine vordefinierte Zeitdauer zu beleuchten bzw. zu verschatten. Nach Ablauf der vordefinierten Zeitdauer kann automatisch die Klappe 460 geöffnet werden, so dass der Transponder 406 in die Aufnahme 454 gelangt. Auch hier versteht es sich, dass andere Ausgestaltungen möglich sind, solange in definierter und stets im Wesentlichen gleicher Weise ein Helligkeitsverlauf generiert werden kann. Bei Varianten der Erfindung kann zusätzlich die Umgebungshelligkeit in die Auswertung mit einfließen.

Ferner kann ein Referenzhelligkeitsverlaufsbereich durch einen Kalibrierungslauf ermittelt werden, bei dem eine Vielzahl von Transpondern beleuchtet bzw. beschattet wird und die erfassten Helligkeitsverläufe bzw. -muster ausgewertet werden.

Im Unterschied zur Ereigniserzeugungsvorrichtung 444 nach Figur 4a, 4b oder 4c ist in der Figur 4d eine Ereigniserzeugungsvorrichtung 444 gezeigt, die eingerichtet ist zum Generieren eines definierten Tastmusters eines Transponders 406. Hierzu kann eine Tastereinrichtung 464 (z.B. ein hydraulischer oder elektrischer Tastenimpulserzeuger) in der Ereigniserzeugungsvorrichtung 444 angeordnet sein, um auf einen auf der Klappe 460 liegenden Transponder 406 für eine definierte Zeitdauer einen bestimmten Tastendruck auszuüben. Nach Ablauf der definierten Zeitdauer kann automatisch die Klappe 460 geöffnet werden, so dass der Transponder 406 in die Aufnahme 454 gelangt. Auch hier versteht es sich, dass andere Ausgestaltungen möglich sind, solange ein definierter und stets im Wesentlichen Tastmuster generiert werden kann.

Ferner kann ein Referenztastverlaufsbereich durch einen Kalibrierungslauf ermittelt werden, bei dem eine Vielzahl von Transpondern mit einem bestimmten Tastmuster beaufschlagt wird und die erfassten Tastmuster ausgewertet werden.

Es versteht sich, dass die Ereigniserzeugungsvorrichtungen 444 der Figuren 4a bis d miteinander kombiniert werden können und/oder ein Ortungssystem zwei oder mehr Ereigniserzeugungsvorrichtungen 444 umfassen kann.

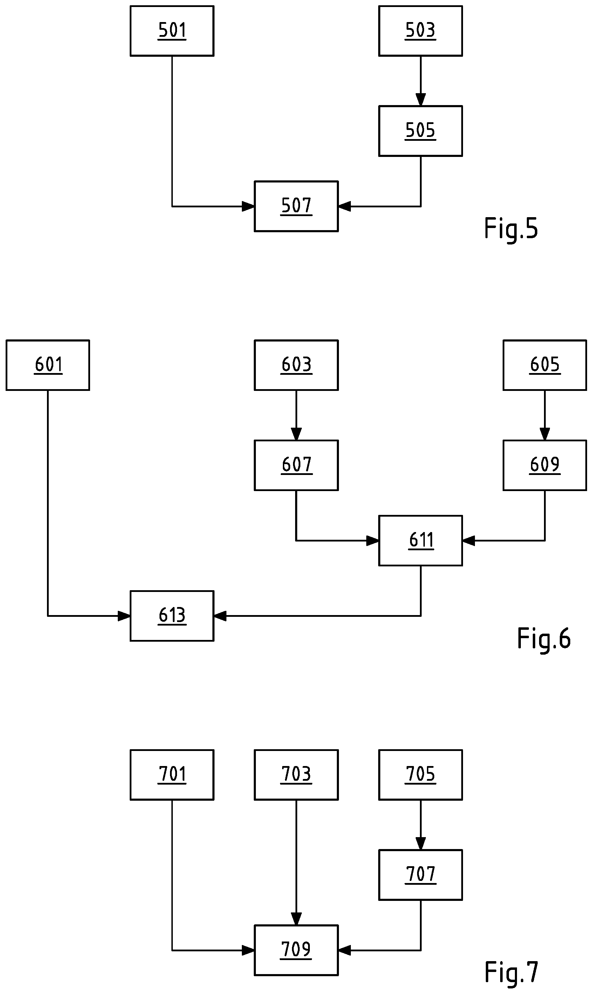

Die Figur 5 zeigt ein Diagramm eines weiteren Ausführungsbeispiels eines Kopplungsverfahrens gemäß der vorliegenden Erfindung, das beispielsweise bei dem Ortungssystem nach Figur 2 verwendet werden kann.

In Schritt 501 kann ein Bereitstellen eines (beispielsweise entsprechend dem Verfahren nach Figur 3) erzeugten Kopplungsdatensatzes erfolgen. In Schritt 503 kann (insbesondere analog zu Schritt 303) ein Erhalten eines zweiten durch die mindestens eine Empfangseinrichtung empfangenen Transponderdatensatzes eines zweiten Transponders erfolgen.

In Schritt 505 kann (insbesondere analog zu Schritt 305) ein Bestimmen erfolgen, ob der in dem erhaltenen zweiten Transponderdatensatz enthaltene zweite Ereignisverlauf ein vordefiniertes Ereigniskriterium erfüllt. Und in Schritt 507 kann (insbesondere analog zu Schritt 307) ein Koppeln des digitalen Objekts mit dem zweiten Transponder erfolgen durch Hinzufügen der zweiten Transponderkennung zu dem bereitgestellten Kopplungsdatensatzes, nur dann, wenn zumindest bestimmt wird, dass der zweite Ereignisverlauf das vordefinierte Ereigniskriterium erfüllt.

Die Figur 6 zeigt ein Diagramm eines weiteren Ausführungsbeispiels eines Kopplungsverfahrens gemäß der vorliegenden Erfindung, das beispielsweise bei dem Ortungssystem nach Figur 2 verwendet werden kann.

In einem Schritt 601 erfolgt ein Bereitstellen einer Objektkennung eines digitalen Objekts, wie zuvor beschrieben wurde. In Schritt 603 erfolgt ein Erhalten eines durch mindestens eine Empfangseinrichtung eines Ortungssystems empfangenen ersten Transponderdatensatzes eines ersten Transponders, wie zuvor beschrieben wurde.

In Schritt 605 kann ein Erhalten eines zweiten durch die mindestens eine Empfangseinrichtung empfangenen Transponderdatensatzes eines zweiten Transponders erfolgen, wie bereits beschrieben wurde.

In Schritt 607 erfolgt ein Bestimmen, ob der in dem erhaltenen Transponderdatensatz enthaltene erste Ereignisverlauf ein vordefiniertes Ereigniskriterium erfüllt, wie zuvor beschrieben wurde.

In Schritt 609 kann ein Bestimmen erfolgen, ob der in dem erhaltenen Transponderdatensatz enthaltene zweite Ereignisverlauf ein vordefiniertes Ereigniskriterium erfüllt, wie zuvor beschrieben wurde.

In Schritt 611 kann bestimmt werden, ob der zweite Ereignisverlauf und der erste Ereignisverlauf ein Synchronizitätskriterium erfüllen. Das Synchronizitätskriterium kann eine Zeitvorgabe definieren. Beispielsweise kann das Synchronizitätskriterium vorgeben, dass der erste Ereignisverlauf und der zweite Ereignisverlauf im Wesentlichen gleichzeitig erfolgen müssen.

Mit anderen Worten, der erste Transponder und der zweite Transponder müssen das Ereignis, wie eine Bewegung (beispielsweise gleichzeitiges Schütteln der beiden Transponder), einen Temperaturwechsel, ein Tastmuster (beispielsweise gleichzeitiges Drücken des jeweiligen Tasters), einen Helligkeitswechsel und/oder dergleichen gleichzeitig erfahren. Beispielsweise kann beim Bestimmen geprüft werden, ob der erste Ereignisverlauf und der zweite Ereignisverlauf in einem durch das Synchronizitätskriterium definierten Zeitfester stattgefunden haben.

Es versteht sich, dass auch erst der Schritt 611 und dann die Schritte 607 und 609 durchgeführt werden können.

In Schritt 613 kann ein Koppeln des digitalen Objekts mit dem ersten Transponder und dem zweiten Transponder erfolgen durch ein Generieren des Kopplungsdatensatzes, enthaltend die Objektkennung des digitalen Objekts, die erste Transponderkennung des ersten Transponders und die zweite Transponderkennung des zweiten Transponders, nur dann, wenn zumindest bestimmt wird, dass der erste Ereignisverlauf das vordefinierte Ereigniskriterium erfüllt, der zweite Ereignisverlauf das vordefinierte Ereigniskriterium erfüllt und der erste Ereignisverlauf und der zweite Ereignisverlauf das Synchronizitätskriterium erfüllen.

Die Figur 7 zeigt ein Diagramm eines weiteren Ausführungsbeispiels eines Kopplungsverfahrens gemäß der vorliegenden Erfindung, das beispielsweise bei dem Ortungssystem nach Figur 2 verwendet werden kann.

In Schritt 701 erfolgt ein Bereitstellen einer Objektkennung eines ersten digitalen Objekts und in Schritt 703 ein Bereitstellen einer weiteren Objektkennung eines weiteren digitalen Objekts.

In Schritt 705 kann (insbesondere analog zu Schritt 303) ein Erhalten eines ersten durch die mindestens eine Empfangseinrichtung empfangenen Transponderdatensatzes eines ersten Transponders erfolgen.

In Schritt 707 kann (insbesondere analog zu Schritt 705) ein Bestimmen erfolgen, ob der in dem erhaltenen ersten Transponderdatensatz enthaltene erste Ereignisverlauf ein vordefiniertes Ereigniskriterium erfüllt.

In Schritt 709 kann ein Koppeln des digitalen Objekts und des weiteren digitalen Objekts mit dem ersten Transponder erfolgen durch ein Generieren eines Kopplungsdatensatzes, enthaltend die Objektkennung des digitalen Objekts, die weitere Objektkennung des weiteren Objekts und die erste Transponderkennung des ersten Transponders, nur dann, wenn zumindest bestimmt wird, dass der erste Ereignisverlauf das vordefinierte Ereigniskriterium erfüllt.

Hierbei können die beschriebenen Verfahren gemäß den Figuren 3 und 5 bis 7 miteinander kombiniert werden. Beispielsweise können eine Mehrzahl von Transpondern mit einer Mehrzahl von digitalen Objekten durch eine Kombination der Verfahren 5 und/oder 6 und 7 miteinander verknüpft werden.

### Beispiel: Fertigungsaufträge

Im Stand der Technik werden beim Erzeugen von Fertigungsaufträgen (FAUF) Auftragspapiere gedruckt und fertigungsbereichsweise in einem Arbeitsvorrat in ihrer Reihenfolge priorisiert. Um einen Auftrag aus dem Arbeitsvorrat zu beginnen, werden beim Stand der Technik die gedruckten Auftragspapiere aus dem sortierten Stapel entnommen und mit Ausgangsmaterialien durch die Produktion bewegt. Durch Umsortieren der Papiere kann im Stand der Technik die Priorisierung geändert werden. Es ist im Stand der Technik zudem möglich, nicht den obersten Auftrag zu entnehmen.

Beim Einsatz eines RTLS gemäß der beschriebenen Erfindung können die Fertigungsaufträge (digitale Objekte) anstatt des physischen Papierdrucks (oder zusätzlich) in einen Speicher geschrieben werden ("e-Druck"). Dies kann zentral für alle Fertigungsbereiche geschehen, aber auch dezentral für jeden Bereich einzeln. Zusätzlich zu den Objektkennungen können weitere Parameter gespeichert sein (z.B. Unterteilung Fertigungsbereiche, Priorisierung, Zuordnung zu Nutzern oder Maschinen). Die Objektkennungen im Speicher bilden insbesondere den Arbeitsvorrat.

Das Koppeln von Fertigungsauftrag bzw. digitalem Objekt mit dem Transponder erfolgt beispielsweise durch Entnehmen eines Transponders aus einem Transponderspeicher in Form eines Behälters in einem Bereich, der mit mindestens einer Empfangseinrichtung des Ortungssystem ausgeleuchtet ist. Das Entnehmen kann durch die mindestens eine Empfangseinrichtung erfasst werden und einen RTLS-Trigger erzeugen, der mit der Transponderkennung verknüpft ist. Dies kann z.B. ein bestimmtes Bewegungsprofil und/ oder ein definierter Ortswechsel und/oder sonstige Sensorsignale des Transponders sein, wie beschrieben wurde.

Aus dem Auftragsspeicher wird beispielsweise zufällig oder anhand von definierten Kriterien ein Fertigungsauftrag mit zugehöriger Objektkennung ausgewählt und mit der Transponderkennung verknüpft, wie beschrieben wurde.

Statt der Auftragspapiere (oder zusätzlich dazu) können sich nun die Transponder mit den zu bearbeitenden Produkten physisch durch die Produktion bewegen. Diese Ortswechsel können dann innerhalb des RTLS-Systems ausgewertet und beispielsweise für die Automatisierung der Fertigungssteuerung eingesetzt werden.

In einer Ausführungsvariante können die Fertigungsaufträge im Speicher mit Parametern versehen sein (z.B. Unterteilung in Fertigungsbereiche, Priorisierung, Zuordnung zu Mitarbeitenden oder Maschinen). Diese können entweder aus dem Ortungssystem, insbesondere einem ERP-System des Ortungssystems, stammen und/oder manuell über eine Schnittstelle hinzugefügt werden. Somit kann z.B. abhängig vom Ort des Ereignisses, das die Kopplung auslöst, ein Auftrag für den zugeordneten Fertigungsbereich ausgewählt werden, wie beschrieben wurde. Die Aufträge im Speicher können bis zum Zeitpunkt der Kopplung in ihrer Reihenfolge geändert werden (manuell und/oder durch Änderung von Parametern oder durch Änderung der Reihenfolgeregeln).

### Bezugszeichenliste:

- 100: Ortungssystem
- 102: Datenverarbeitungsvorrichtung
- 104: Empfangseinrichtung
- 106: Transponder
- 188: Objekt
- 190: Datenverarbeitungsvorrichtung
- 196: Sender
- 198: Ortungssystem
- 200: Ortungssystem
- 202: Datenverarbeitungsvorrichtung
- 204: Empfangseinrichtung
- 206: Transponder
- 208: Ereignissensor
- 210: Verarbeitungsmodul
- 212: Sendemodul
- 214: Antenne
- 216: Antennensignalauswertemodul
- 218: Kommunikationsmodul
- 220: Bereitstellungsmodul
- 222: Erhaltungsmodul
- 224: Auswertemodul
- 226: Kopplungsmodul
- 228: Datenspeicher
- 230: Objektspeicher
- 232: Erzeugungsmodul
- 234: Datenspeicher
- 236: Kopplungsbereich
- 238: Kommunikationsverbindung
- 240: Netz
- 242: Kommunikationsmodul
- 406: Transponder
- 444: Ereigniserzeugungsvorrichtung
- 446: Transponderspeicher
- 448: Vereinzelungsmodul
- 450: Führung
- 452: Führungselemente
- 454: Aufnahme
- 458: Temperierungseinrichtung
- 460: Klappe
- 462: Beleuchtungseinrichtung
- 464: Tastereinrichtung

## Patentansprüche

1. Kopplungsverfahren, insbesondere computerimplementiertes Kopplungsverfahren, umfassend:
- Bereitstellen einer Objektkennung eines digitalen Objekts,
- Erhalten eines durch mindestens eine Empfangseinrichtung (204) eines Ortungssystems (200) empfangenen ersten Transponderdatensatzes eines ersten Transponders (206, 406),
- wobei der erste Transponder (206, 406) einen Ereignissensor (208) umfasst, eingerichtet zum Erfassen eines ersten Ereignisverlaufs des ersten Transponders (206, 406),
- wobei der erste Transponderdatensatz zumindest eine erste Transponderkennung des ersten Transponders (206, 406) und den erfassten ersten Ereignisverlauf enthält,
- Bestimmen, ob der in dem erhaltenen ersten Transponderdatensatz enthaltene erste Ereignisverlauf ein vordefiniertes Ereigniskriterium erfüllt, und
- Koppeln des digitalen Objekts mit dem ersten Transponder (206, 406) durch ein Generieren eines Kopplungsdatensatzes, enthaltend die Objektkennung des digitalen Objekts und die erste Transponderkennung des ersten Transponders (206, 406), nur dann, wenn zumindest bestimmt wird, dass der erste Ereignisverlauf das vordefinierte Ereigniskriterium erfüllt.

2. Kopplungsverfahren nach Anspruch 1, **dadurch gekennzeichnet, dass**
- das vordefinierte Ereigniskriterium mindestens einen Referenzereignisverlaufsbereich umfasst,
- das Bestimmen, ob der erste Ereignisverlauf das vordefinierte Ereigniskriterium erfüllt, ein Vergleichen des ersten Ereignisverlaufs mit dem Referenzereignisverlaufsbereich umfasst, und
- der erste Ereignisverlauf das vordefinierte Ereigniskriterium zumindest dann erfüllt, wenn der erste Ereignisverlauf in dem Referenzereignisverlaufsbereich liegt.

3. Kopplungsverfahren nach Anspruch 1 oder 2, **dadurch gekennzeichnet, dass**
- der mindestens eine Ereignissensor (208) ein Bewegungssensor ist, eingerichtet zum Erfassen eines Bewegungsverlaufs des ersten Transponders (206, 406), insbesondere eines Beschleunigungsverlaufs des ersten Transponders (206, 406), und
- das vordefinierte Ereigniskriterium mindestens einen Referenzbewegungsverlaufsbereich umfasst, insbesondere ein Referenzbeschleunigungsverlaufsbereich, und/oder
- der mindestens eine Ereignissensor (208) ein Taster ist, eingerichtet zum Erfassen eines Tastmuster des ersten Transponders (206, 406), und
- das vordefinierte Ereigniskriterium mindestens einen Referenztastverlaufsbereich umfasst,
und/oder
- der mindestens eine Ereignissensor (208) ein Temperatursensor ist, eingerichtet zum Erfassen eines Temperaturverlaufs des ersten Transponders (206, 406), und
- das vordefinierte Ereigniskriterium mindestens einen
Referenztemperaturverlaufsbereich umfasst, und/oder
- der mindestens eine Ereignissensor (208) ein Helligkeitssensor ist, eingerichtet zum Erfassen eines Helligkeitsverlaufs des ersten Transponders (206, 406), und
- das vordefinierte Ereigniskriterium mindestens einen Referenzhelligkeitsverlaufsbereich umfasst.

4. Kopplungsverfahren nach einem der vorherigen Ansprüche, **dadurch gekennzeichnet, dass**
- das Bereitstellen der Objektkennung des digitalen Objekts ein Auswählen eines digitalen Objekts aus einer Mehrzahl von in einem Objektspeicher (230) des Ortungssystems (200) gespeicherten digitalen Objekten umfasst, basierend auf mindestens einem vordefinierten Auswahlkriterium,
- wobei das mindestens eine Auswahlkriterium ein Ortsereigniskriterium oder ein Reihenfolgekriterium ist.

5. Kopplungsverfahren nach einem der vorherigen Ansprüche, **dadurch gekennzeichnet, dass** das Kopplungsverfahren ferner umfasst:
- Verwenden einer Ereigniserzeugungsvorrichtung (444) zum Generieren eines ersten Ereignisverlaufs des ersten Transponders (206, 406), wobei der generierte erste Ereignisverlauf das vordefinierte Ereigniskriterium erfüllt.

6. Kopplungsverfahren nach einem der vorherigen Ansprüche, **dadurch gekennzeichnet, dass** das Kopplungsverfahren ferner umfasst:
- Erhalten, zusammen mit dem Transponderdatensatzes des ersten Transponders (206, 406), eines Signalstärkedatensatzes, enthaltend zumindest ein Signalstärkedatum mindestens eines durch die mindestens eine Empfangseinrichtung (204) empfangenen Transpondersignals und/oder ein Orientierungsdatum des das Transpondersignal aussendenden ersten Transponders (206, 406), wobei das Transpondersignal zumindest die erste Transponderkennung und mindestens einen durch den Ereignissensor (208) erfassten Ereignisparameterwert enthält,
- Bestimmen, ob das mindestens eine Signalstärkedatum ein Signalstärkekriterium erfüllt und/oder ob das mindestens eine Orientierungsdatum ein Orientierungskriterium erfüllt,
- wobei das Koppeln des digitalen Objekts mit dem ersten Transponder (206, 406) nur dann erfolgt, wenn zumindest bestimmt wird, dass das mindestens eine Signalstärkedatum das Signalstärkekriterium erfüllt und/oder das mindestens eine Orientierungsdatum das Orientierungskriterium erfüllt.

7. Kopplungsverfahren nach einem der vorherigen Ansprüche, **dadurch gekennzeichnet, dass**
- das Generieren des Kopplungsdatensatzes ferner ein Erzeugen einer Kopplungsdatensatzkennung umfasst, und
das Kopplungsverfahren ferner insbesondere umfasst:
- Bewirken eines Ausgebens einer Kopplungsbestätigung bei einem Generieren des Kopplungsdatensatzes.

8. Kopplungsverfahren nach einem der vorherigen Ansprüche, **dadurch gekennzeichnet, dass** das Kopplungsverfahren ferner umfasst:
- Bereitstellen des erzeugten Kopplungsdatensatzes,
- Erhalten eines zweiten durch die mindestens eine Empfangseinrichtung (204) empfangenen Transponderdatensatzes eines zweiten Transponders (206, 406),
- wobei der zweite Transponder (206, 406) einen Ereignissensor (208) umfasst, eingerichtet zum Erfassen eines zweiten Ereignisverlaufs des zweiten Transponders (206, 406),
- wobei der zweite Transponderdatensatz zumindest eine zweite Transponderkennung des zweiten Transponders (206, 406) und den erfassten zweiten Ereignisverlauf enthält,
- Bestimmen, ob der in dem erhaltenen zweiten Transponderdatensatz enthaltene zweite Ereignisverlauf ein vordefiniertes Ereigniskriterium erfüllt, und
- Koppeln des digitalen Objekts mit dem zweiten Transponder (206, 406) durch Hinzufügen der zweiten Transponderkennung zu dem bereitgestellten Kopplungsdatensatzes, nur dann, wenn zumindest bestimmt wird, dass der zweite Ereignisverlauf das vordefinierte Ereigniskriterium erfüllt.

9. Kopplungsverfahren nach einem der vorherigen Ansprüche 1 bis 7, **dadurch gekennzeichnet, dass** Kopplungsverfahren ferner umfasst:
- Erhalten eines zweiten durch die mindestens eine Empfangseinrichtung (204) empfangenen Transponderdatensatzes eines zweiten Transponders (206, 406),
- wobei der zweite Transponder (206, 406) einen Ereignissensor (208) umfasst, eingerichtet zum Erfassen eines zweiten Ereignisverlaufs des zweiten Transponders (206, 406),
- wobei der zweite Transponderdatensatz zumindest eine zweite Transponderkennung des zweiten Transponders (206, 406) und den erfassten zweiten Ereignisverlauf enthält,
- Bestimmen, ob der in dem erhaltenen zweiten Transponderdatensatz enthaltene zweite Ereignisverlauf ein vordefiniertes Ereigniskriterium erfüllt,
- Bestimmen, ob der zweite Ereignisverlauf und der erste Ereignisverlauf ein Synchronizitätskriterium erfüllen, und
- Koppeln des digitalen Objekts mit dem ersten Transponder (206, 406) und dem zweiten Transponder (206, 406) durch ein Generieren des Kopplungsdatensatzes, enthaltend die Objektkennung des digitalen Objekts, die erste Transponderkennung des ersten Transponders (206, 406) und die zweite Transponderkennung des zweiten Transponders (206, 406), nur dann, wenn zumindest bestimmt wird, dass der erste Ereignisverlauf das vordefinierte Ereigniskriterium erfüllt, der zweite Ereignisverlauf das vordefinierte Ereigniskriterium erfüllt und der erste Ereignisverlauf und der zweite Ereignisverlauf das Synchronizitätskriterium erfüllen.

10. Kopplungsverfahren nach einem der vorherigen Ansprüche, **dadurch gekennzeichnet, dass**
- das Bereitstellen einer Objektkennung eines digitalen Objekts ein Bereitstellen einer weiteren Objektkennung eines weiteren digitalen Objekts umfasst, und
- Koppeln des digitalen Objekts und des weiteren digitalen Objekts mit dem ersten Transponder (206, 406) durch ein Generieren eines Kopplungsdatensatzes, enthaltend die Objektkennung des digitalen Objekts, die weitere Objektkennung des weiteren Objekts und die erste Transponderkennung des ersten Transponders (206, 406), nur dann, wenn zumindest bestimmt wird, dass der erste Ereignisverlauf das vordefinierte Ereigniskriterium erfüllt.

11. Computerprogramm umfassend Befehle, die bewirken, dass ein Prozessor einer Datenverarbeitungsvorrichtung (202) die Verfahrensschritte nach Anspruch 1 ausführt.

12. Datenverarbeitungsvorrichtung (202) für ein Ortungssystem (200), umfassend:
- mindestens ein Bereitstellungsmodul (220), eingerichtet zum Bereitstellen einer Objektkennung eines digitalen Objekts,
- mindestens ein Erhaltungsmodul (222), eingerichtet zum Erhalten eines durch mindestens eine Empfangseinrichtung (204) eines Ortungssystems (200) empfangenen ersten Transponderdatensatzes eines ersten Transponders (206, 406),
- wobei der erste Transponder (206, 406) einen Ereignissensor (208) umfasst, eingerichtet zum Erfassen eines ersten Ereignisverlaufs des ersten Transponders (206, 406),
- wobei der erste Transponderdatensatz zumindest eine erste Transponderkennung des ersten Transponders (206, 406) und den erfassten ersten Ereignisverlauf enthält,
- mindestens ein Auswertemodul (224), eingerichtet zum Bestimmen, ob der in dem erhaltenen Transponderdatensatz enthaltene erste Ereignisverlauf ein vordefiniertes Ereigniskriterium erfüllt, und
- mindestens ein Kopplungsmodul (226), eingerichtet zum Koppeln des digitalen Objekts mit dem ersten Transponder (206, 406) durch ein Generieren eines Kopplungsdatensatzes, enthaltend die Objektkennung des digitalen Objekts und die erste Transponderkennung des ersten Transponders (206, 406), nur dann, wenn zumindest bestimmt wird, dass der erste Ereignisverlauf das vordefinierte Ereigniskriterium erfüllt.

13. Ortungssystem (200), umfassend:
- eine Datenverarbeitungsvorrichtung (202) nach Anspruch 12, und
- mindestens eine Empfangseinrichtung (204), eingerichtet zum Empfangen von Transpondersignalen.

14. Ortungssystem (200) nach Anspruch 13, **dadurch gekennzeichnet, dass**
- das Ortungssystem (200) ferner mindestens einer Ereigniserzeugungsvorrichtung (444) umfasst, eingerichtet zum Generieren eines ersten Ereignisverlaufs des ersten Transponders (206, 406), wobei der generierte erste Ereignisverlauf das vordefinierte Ereigniskriterium erfüllt.

15. Verwendung einer Ereigniserzeugungsvorrichtung (444) in einem Kopplungsverfahren nach Anspruch 1 zum Generieren des ersten Ereignisverlaufs des ersten Transponders (206, 406), wobei der generierte erste Ereignisverlauf das vordefinierte Ereigniskriterium erfüllt.
